# EUROPEAN PATENT SPECIFICATION

(11) **EP 3 062 523 B1**
(45) Date of publication and mention of the grant of the patent: **30.01.2019**
(21) Application number: 14856190.5
(22) Date of filing: 14.10.2014
(51) Int. Cl.: H04N 21/435, H04N 21/236, H04N 21/431, H04N 21/44, H04N 21/84

(54) **DISPLAY PROCESSING DEVICE, DISTRIBUTION DEVICE, AND METADATA**
ANZEIGEVERARBEITUNGSVORRICHTUNG, VERTEILUNGSVORRICHTUNG UND METADATEN
DISPOSITIF DE TRAITEMENT D'AFFICHAGE, DISPOSITIF DE DISTRIBUTION, ET MÉTADONNÉES

(30) Priority: 22.10.2013 JP 2013219535; 25.03.2014 JP 2014061379; 01.07.2014 JP 2014135752
(43) Date of publication of application: 31.08.2016
(73) Proprietor: Sharp Kabushiki Kaisha, Osaka-shi, Osaka 545-8522 (JP)
(72) Inventor: WATANABE, Shuhichi, Osaka-shi, Osaka 545-8522 (JP); TOKUMO, Yasuaki, Osaka-shi, Osaka 545-8522 (JP); IWANAMI, Takuya, Osaka-shi, Osaka 545-8522 (JP)
(74) Representative: Müller-Boré & Partner Patentanwälte PartG mbB
(86) International application number: PCT/JP2014/077350
(87) International publication number: WO 2015/060165

(56) References cited:
- EP-A2- 2 160 022
- WO-A2-2012/125006
- JP-A- 2010 206 380
- JP-A- 2010 226 471
- JP-A- 2013 157 906

## Description

### Technical Field

The present invention mainly relates to a display processing device and a display processing method which display video on a display section, and a distribution device which distributes the video.

### Background Art

MPEG-DASH specifies a standard specification for distributing media by HTTP, and is also able to use distribution of video content (refer to NPL 1).

### Citation List

### Non Patent Literature

NPL 1: "ISO/IEC23009-1", [online], 1 April 2012, ISO/IEC, [search date 11 October 2013], Internet <URL:http://standards.iso.org/ittf/PubliclyAvailableStandard s/c057623_ISO_IEC_23009-1_2012.zip>

### Summary of Invention

### Technical Problem

In recent years, video content is becoming increasingly high-resolution, and after several years, it is assumed that 4K × 2K (horizontal 3840 × vertical 2160) video content, 8K × 4K (horizontal 7680 × vertical 4320) video content, or video content with a higher resolution than the video content is produced and supplied.

In addition, it is assumed that not only is all high resolution video distributed to a viewer of the device, a low-resolution partial video group is generated by dividing such video (full video) in a matrix form, and partial video which is selected by the viewer using a cursor from within the full video which is displayed on the viewer's device is delivered to the viewer's device by communication.

However, since information which indicates a positional relationship between partial videos is not described in MPD data that is specified by the MPEG-DASH up to now, even if the viewer's device references MPD data, there is a difficulty in that an acquisition destination of partial video which is selected by the viewer is specified.

As a method for solving this, a method is given in which the acquisition destination and positional information of each partial video (in detail, left upper coordinates, width, and height of the partial video in a coordinate system in which the left upper coordinates of the full video are set as origin points) are described in association in the MPD data.

### Brief Description of Drawings

Fig. 1 is a block diagram illustrating a main configuration of a distribution device and a television according to Embodiment 1 of the present invention.
Fig. 2 is a diagram schematically illustrating a full video that the distribution device in Fig. 1 is able to distribute and a partial video group in which the full video is divided into a matrix form.
Fig. 3 is a diagram exemplifying metadata that is distributed by the distribution device in Fig. 1.
Fig. 4 is a flow chart illustrating an operation of a television in Fig. 1.
Fig. 5 is a diagram illustrating a modified example of the metadata which is distributed by the distribution device in Fig. 1.
Fig. 6 is a diagram illustrating another modified example of the metadata which is distributed by the distribution device in Fig. 1.
Fig. 7 is a diagram illustrating yet another modified example of the metadata which is distributed by the distribution device in Fig. 1.
Fig. 8 is a diagram for describing an acquisition process for partial video using the distribution device according to a modified example of Embodiment 1 of the present invention.
Fig. 9 is a block diagram illustrating a main configuration of a distribution device and a client terminal according to Embodiment 2 of the present invention.
Fig. 10 is a diagram schematically illustrating a full video that the distribution device in Fig. 9 is able to distribute and a partial video group which configures the full video.
Fig. 11 is a diagram which exemplifies metadata which is distributed by the distribution device in Fig. 9.
Fig. 12 is a flow chart illustrating an operation of the client terminal in Fig. 9.
Fig. 13 is a diagram illustrating another modified example of the metadata which is distributed by the distribution device in Fig. 9.
Fig. 14 is a block diagram illustrating a main configuration of a distribution device and a television according to Embodiment 3 of the present invention.
Fig. 15 is a diagram exemplifying metadata which is distributed by the distribution device in Fig. 14.
Fig. 16 is a flow chart illustrating an operation of a television in Fig. 14.
Fig. 17 is a diagram schematically illustrating which partial video is selected by the television in Fig. 14 which is referenced by the metadata in Fig. 15, with the passage of time, as a partial video that is displayed on a display surface of a tablet terminal.
Fig. 18 is a view illustrating a modified example of the entire image.
Fig. 19 is a diagram illustrating yet another modified example of the metadata which is distributed by the distribution device in Fig. 1.
Fig. 20 is a diagram illustrating yet another modified example of the metadata which is distributed by the distribution device in Fig. 9.
Fig. 21 is a diagram illustrating yet another modified example of the metadata which is distributed by the distribution device in Fig. 9.
Fig. 22 is a diagram for describing yet another modified example of the metadata which is distributed by the distribution device in Fig. 9.
Fig. 23 is a diagram schematically illustrating a format in a case where each tile is different that is stored in a file.
Fig. 24 is a diagram exemplifying MPD data in a case where the file format in Fig. 23 is used.
Fig. 25 is a diagram schematically illustrating a format in a case where each tile is different that is stored in a track.
Fig. 26 is a diagram exemplifying MPD data in a case where the file format in Fig. 25 is used.
Fig. 27 is a diagram schematically illustrating a format in a case where all tiles are stored in one track.
Fig. 28 is a diagram exemplifying MPD data in a case where the file format in Fig. 27 is used.
Fig. 29 is a diagram schematically illustrating a format in a case where a plurality of tiles are stored in a plurality of tracks.
Fig. 30 is a diagram exemplifying MPD data in a case where a file format in Fig. 29 is used.
Fig. 31 is a diagram exemplifying a modified example of MPD data in a case where the file format in Fig. 29 is used.
Fig. 32 is a diagram exemplifying another modified example of MPD data in a case where the file format in Fig. 29 is used.
Fig. 33 is a diagram illustrating another example of MPD data in a case where the file format in Fig. 25 is used.
Fig. 34 is a diagram illustrating an example of MPD data in a case where the file formats in Fig. 23 and Fig. 25 are mixed and used.
Fig. 35 is a diagram illustrating another example of MPD data in a case where the file formats in Fig. 23 and Fig. 25 are mixed and used.
Fig. 36 is a diagram illustrating yet another example of MPD data in a case where the file formats in Fig. 23 and Fig. 25 are mixed and used.
Fig. 37 is a diagram illustrating yet another example of the MPD data which is distributed by the distribution device in Fig. 1.
Fig. 38 is a diagram illustrating yet another example of the MPD data which is distributed by the distribution device in Fig. 1.
Fig. 39 is a diagram illustrating yet another example of MPD data in a case where the file formats in Fig. 23 and Fig. 25 are mixed and used.

### Description of Embodiments

### [Embodiment 1]

A distribution system according to an embodiment of the present invention is described below.

The distribution system according to the present embodiment includes a distribution device, a television, and a tablet terminal.

The distribution device distributes full HD program video, 4K × 2K program video, and 8K × 4K program video which relate to the same program by broadcasting, and the television displays the program video (8K × 4K program video) according to the resolution of a the display panel (8K × 4K) of the distribution.

In addition, the distribution device holds a low-resolution partial video group in which the program video is divided in a matrix form, and according to a request from the television, distributes the partial video to the television by communication.

The television displays the partial video which is received from the distribution device on a tablet terminal.

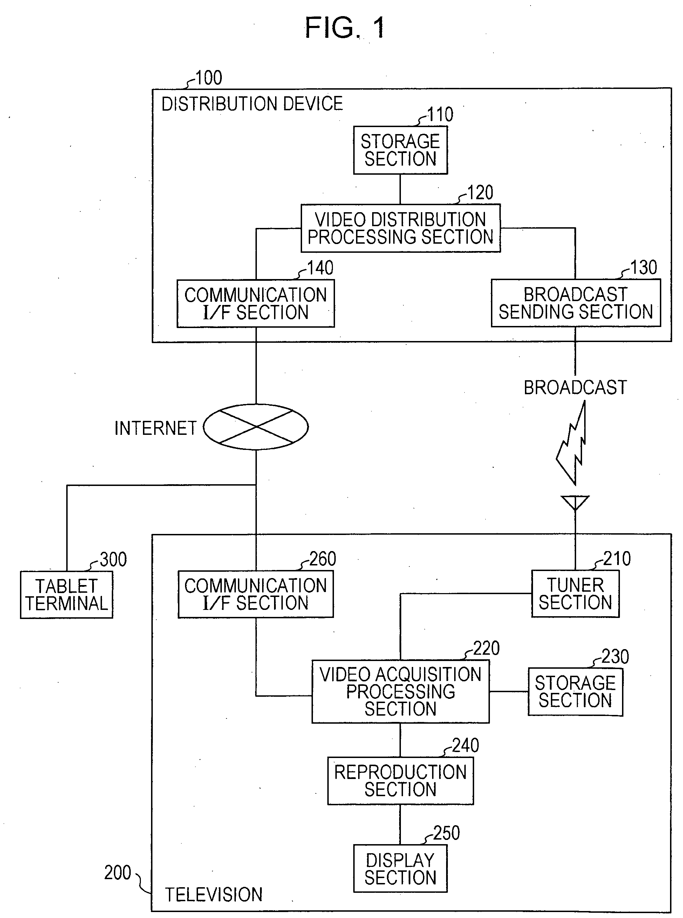

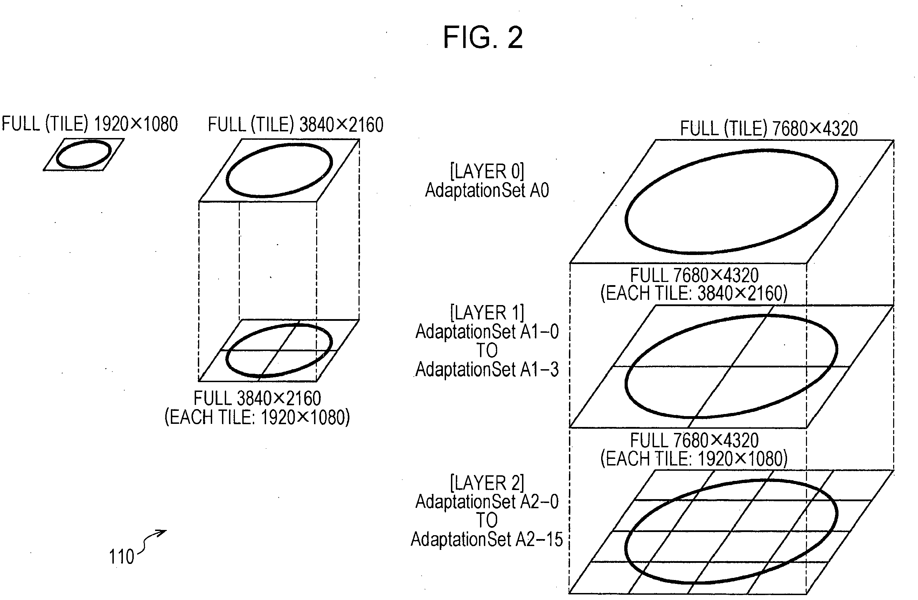

A main configuration of the distribution device and the television is described below with reference to Fig. 1 and Fig. 2. Fig. 1 is a block diagram illustrating a main configuration of the distribution device and the television according to Embodiment 1. Fig. 2 is a diagram schematically illustrating a full video that the distribution device according to Embodiment 1 is able to distribute and a partial video group in which the full video is divided into a matrix form.

### (Distribution Device 100)

As shown in Fig. 1, the distribution device 100 is provided with a storage section 110, a video distribution processing section 120, a broadcast sending section 130, and a communication I/F section 140.

### (Storage Section 110)

As shown in Fig. 2, the storage section 110 is a recording medium which holds full HD program video (full video), 4K × 2K program video (full video), and 8K × 4K program video (full video), and the partial video group of each program video. Here, as shown in Fig. 2, the full video and the partial video may collectively be referred to as "tile".

### (Video Distribution Processing Section 120)

The video distribution processing section 120 (reading means, distribution means) distributes the full HD program video, 4K × 2K program video, and 8K × 4K program video which are read from the storage section 110 through the broadcast sending section 130, and distributes MPD data (metadata) which relates to the program video. In addition, the video distribution processing section 120 distributes the program video which is requested from the viewer's device through the communication I/F section 140 to the device.

### (Broadcast Sending Section 130)

The broadcast sending section 130 sends the program video and MP data which are supplied from the video distribution processing section 120 in the broadcast wave.

### (Communication I/F Section 140)

The communication I/F section 140 sends the partial video which is supplied from the video distribution processing section 120 to a network.

Next, a configuration of the television 200 will be described.

### (Television 200)

As shown in Fig. 1, the television 200 is provided with a tuner section 210, a video acquisition processing section 220, a storage section 230, a reproduction section 240, a display section 250, and a communication I/F (communication interface) section 260.

### (Tuner Section 210)

The tuner section 210 is a tuner which receives a broadcast signal which includes the program video and the metadata.

### (Video Acquisition Processing Section 220)

The video acquisition processing section 220 acquires MPD data (metadata) which relates to the program video which is distributed by the distribution device 100 via the tuner section 210, and records the acquired MPD data in the storage section 230.

In addition, the video acquisition processing section 220 references the acquisition destination of the partial video which is selected by the user that is included in MPD data, and the partial video is acquired from the distribution device 100 which is the acquisition destination. Then, the video acquisition processing section 220 transmits the acquired partial videos to a tablet terminal 300.

### (Storage Section 230)

The storage section 230 is a storage medium which holds the MPD data.

### (Reproduction Section 240)

The reproduction section 240 reproduces the 8K × 4K program video which is acquired from the distribution device 100 and displays the 8K × 4K program video on the display section 250 based on the MPD data.

### (Display Section 250)

The display section 250 is a display which displays 8K × 4K program video.

Here, a rectangular cursor is displayed superimposed on the 8K × 4K program video. The size of the vertical width and the horizontal width of the cursor is the same as the vertical width and horizontal width of each 4K × 2K (or full HD) partial video which is able to be displayed on the tablet terminal 300. In addition, when the horizontal width of the cursor is set as a W dot and the vertical width of the cursor is set as an H dot, the cursor is able to move by each W dot in a lateral direction and by each H dot in a vertical direction. The user is able to select an arbitrary partial video by moving the cursor using a remote controller (not shown in the drawings) of the television 200.

### (Communication I/F Section 260)

The communication I/F section 260 is a communication interface which is used in communication with the distribution device 100.

Next, the tablet terminal 300 will be described.

### (Tablet Terminal 300)

The tablet terminal 300 (mobile terminal) is connected to be able to communicate with the television 200.

When the tablet terminal 300 receives the partial video from the television 200, the received partial video is displayed on the display panel (specified display region) of the tablet terminal 300. Here, in a case of already displaying another partial video, the tablet terminal 300 deletes the partial video during display and newly displays the received partial video.

### (MPD Data)

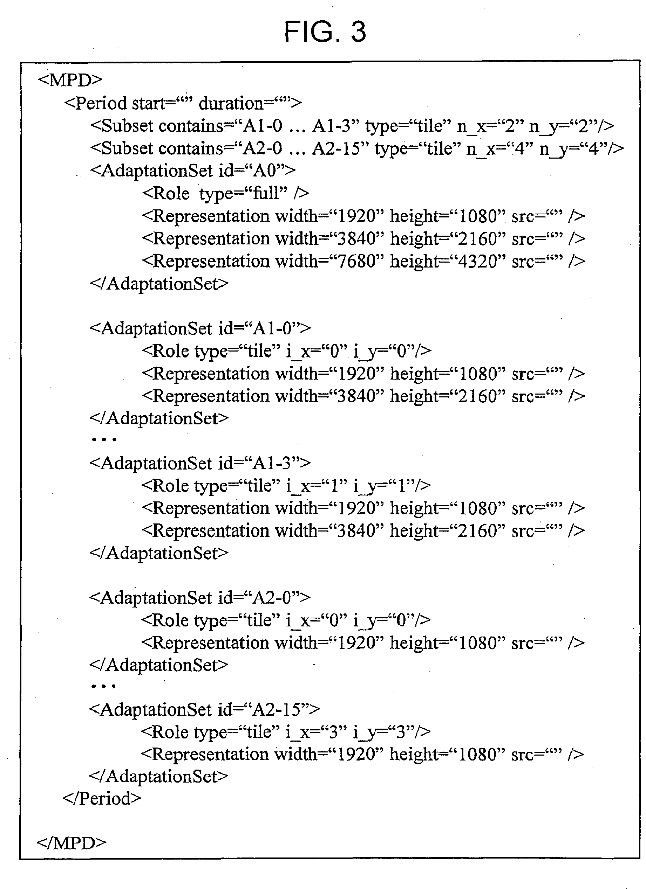

Next, MPD data which is distributed by the distribution device 100 will be described below with reference to Fig. 3.

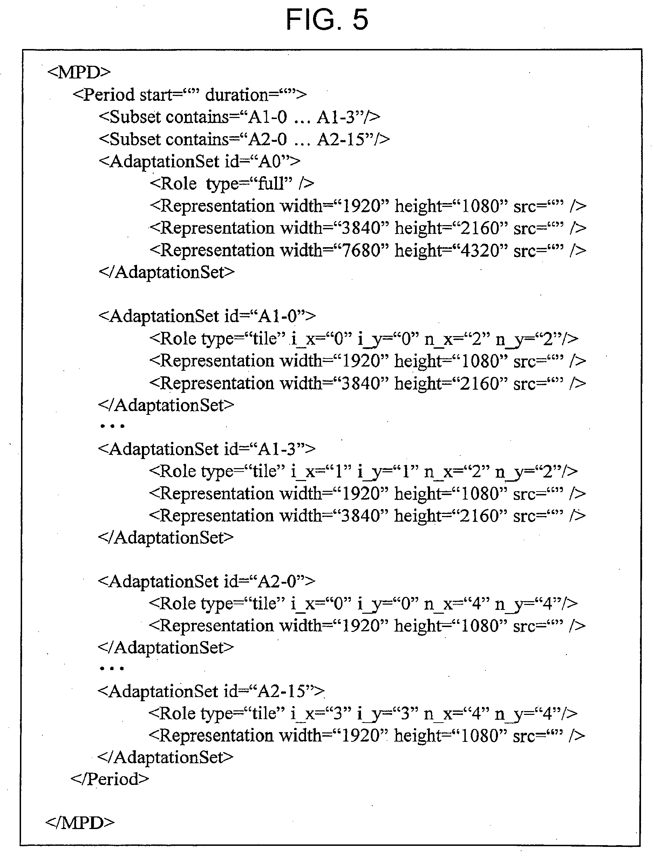

Fig. 3 is a diagram which exemplifies the MPD data. Here, Fig. 3 (similarly in Figs. 5 to 7 and 19 which will be described later) omits description of a portion of information of the MPD data (for example, an attribute value of attribute src) from the viewpoint of simplification of the drawings.

As shown in Fig. 3, the MPD data describes an MPD start tag in a head, and an MPD end tag is described in a tail.

In addition, the MPD data describes a pair of a Period start tag and a Period end tag, and describes information which relates to video data which is able to be reproduced in a period in which a pair of an attribute start and an attribute duration is indicated between the Period start tag and the Period end tag.

As shown in Fig. 3, in detail, a plurality of AdaptationSet tags are described between the Period start tag and the Period end tag.

A Representation tag of full HD video, a Representation tag of 4K × 2K video, a Representation tag of 8K × 4K video, and a Role tag are described between the AdaptaionSet start tag and the AdaptaionSet end tag where the attribute value of the attribute id is "A0". The three videos which correspond to the three Representation tags indicate the same content. That is, any one of the three videos have the same role with a meaning of "full video", and only resolution (size) is different. For this reason, in the MPD data in Fig. 3, the three videos are collectively described along with the Role tag (between the AdaptaionSet start tag and the AdaptaionSet end tag) in the same AdaptationSet, and as described below, the resolution (size) is described in the respective Representation tag.

The attribute value (attribute value of attribute width and attribute height) which indicates the size of the corresponding video, and the attribute value (attribute value of attribute src) which indicates the acquisition destination of the corresponding video are described in each Representation tag. Here, in a case where the corresponding video is sent by being broadcast, the attribute value of attribute src is a packet ID of each packet which configures the corresponding video. For example, the packet ID is described in the Representation tag of 8K × 4K video. In addition, in a case where the corresponding video is sent by communication, the attribute value of attribute src is an URL which indicates a request destination of the corresponding video. For example, the URL is described in the Representation tag of full HD video and a Representation tag of 4K × 2K video.

In addition, an attribute type which indicates whether each video is full video or partial video in the Role tag, "full" which indicates that each video is full video is described as the attribute value.

The Representation tag of full HD video, the Representation tag of 4K × 2K video, and a Role tag are described between the AdaptaionSet start tag and the AdaptaionSet end tag where the attribute value of the attribute id is "A1-0". The two videos which correspond to the two Representation tags indicate the same content. That is, either of the two videos have a role with the same meaning "partial video of an index value (0, 0)" as described below, and are only different in resolution (size). For this reason, in MPD data in Fig. 3, the two videos are collectively described along with the Role tag (between the AdaptaionSet start tag and the AdaptaionSet end tag) in the same AdaptationSet, and the resolution (size) is described in the respective Representation tag.

The attribute value which indicates the size of the corresponding video and the attribute value which indicates the acquisition destination of the corresponding video are described in each Representation tag. Here, the attribute value of the attribute src is an URL which indicates the acquisition destination of the corresponding video.

In addition, the attribute type which indicates whether each video that corresponds to each Representation tag that is described immediately after the Role tag is full video or partial video is described in the Role tag, and "tile" is described which indicates that each video is partial video as the attribute value. In addition, as shown in Fig. 3, an attribute i_x and an attribute i_y are described in the AdaptaionSet start tag in which "tile" is described as the attribute value of the attribute type.

A pair of the attribute value "0" of the attribute i_x and the attribute value "0" of the attribute i_y of the Role tag (that is, index value (0, 0)) indicates that each partial video which corresponds to each Representation tag that is described immediately after the Role tag is the partial video of a first row, first column out of the partial video group in which the full video is divided into a matrix form. More generally speaking, a pair of the attribute value "i" of the attribute i_x and the attribute value "j" of the attribute i_y of the Role tag (that is, index value (i, j)) indicates that each partial video which corresponds to each Representation tag that is described immediately after the Role tag is the partial video of an (i + 1)^{th} row and a (j + 1)^{th} column out of the partial video group in which full video is divided into a matrix form.

Element AdaptaionSet (AdaptationSet A1-0) in which the attribute value of the attribute id of the AdaptaionSet start tag is "A1-0" is described above, but it is also possible to interpret in the same manner another element AdaptationSet (AdaptationSet A1-1 to AdaptationSet Al-3) of layer 1 and an element AdaptationSet (AdaptationSet A2-0 to AdaptationSet A2-15) of layer 2.

In addition, as shown in Fig. 3, a Subset tag is described between the Period start tag and the Period end tag. Each Subset tag indicates that the partial video group which corresponds to an attribute value of attribute contains is the partial video group in which the full video is divided into a number of vertical pieces and a number of horizontal pieces and is generated, and a pair of an attribute n_x and an attribute n_y is included.

Here, the video acquisition processing section 220 determines whether the element AdaptationSet of at least one layer of layer 1 and layer 2 in order to acquire the partial video is referenced based on the setting of the television 200. In addition, in a case where the video acquisition processing section 220 references the element AdaptationSet (AdaptationSet A0) of layer 0 and the element AdaptationSet of layer 1, it is determined which Representation tag is referenced out of the two Representation tags which are included in each AdaptationSet element based on the resolution of the display section 250. That is, since the resolution is 8K × 4K, the video acquisition processing section 220 acquires 8K × 4K full video in a case where the element AdaptationSet of layer 0 is referenced, and acquires 4K × 2K partial video in a case where the element AdaptationSet of layer 1 is referenced.

The MPD data is described above.

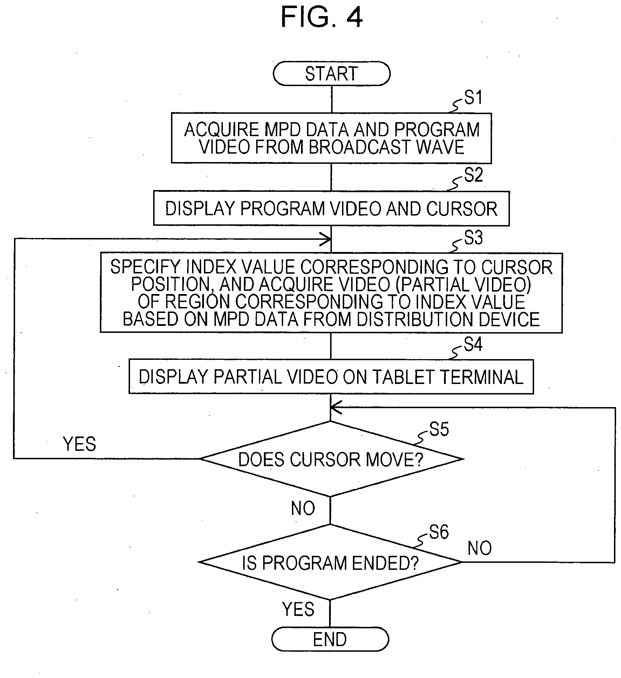

Next, an operation of the television 200 will be described with reference to Fig. 4. Here, as a premise, the television 200 is set so as to reference the AdaptationSet of layer 2 in order to acquire the partial video.

### (Operation of Television 200)

Fig. 4 is a flow chart illustrating an operation of the television 200.

As shown in Fig. 4, the video acquisition processing section 220 of the television 200 initially acquires MPD data and program video (step S1). In detail, the video acquisition processing section 220 acquires the MPD data from the broadcast wave. Then, the video acquisition processing section 220 references the attribute value (packet ID) of the attribute src which relates to 8K × 4K full video that is included in MPD data, and the packet group (packet group which configures the 8K × 4K full video) which holds the packet ID which is included in the broadcast wave are extracted from the broadcast wave.

After step S1, the reproduction section 140 reproduces the program video (8K × 4K full video) and displays on the display section 250, and the rectangular cursor described above (cursor of vertical 1920 dots and horizontal 1080 dots) is indicated on the display section 250 (step S2). Here, for example, the reproduction section may display the rectangular cursor at a position at which the left upper end of the full video is the left upper end of the cursor.

After step S2, in step S3, the video acquisition processing section 220 specifies the index value which corresponds to the current cursor position. For example, in a case where the left upper end of the cursor matches the left upper end of full video, the video acquisition processing section 220 specifies the index value (0, 0) which corresponds to the cursor position. Then, in step S3, the video acquisition processing section 220 references the MPD data, and specifies the acquisition destination of the partial video which corresponds to the index value. For example, in a case where the specified index value is (0, 0), the Role tag such that the attribute value of attribute i_x and the attribute value of attribute i_y is 0 is retrieved from within the MPD data, and the attribute value of the attribute src which is included in the element AdaptationSet which includes such a Role tag is specified. Furthermore, in step S3, the video acquisition processing section 220 acquires partial video from the specified acquisition destination (distribution device 100).

Here, in a case where a step immediately before step S3 is step S5, it is possible to obtain the index value which corresponds to the current cursor position by adding at least one value of (1, 0), (-1, 0), (0, 1) or (0, -1) with respect to the index value which corresponds to the immediately previous cursor position (for example, in step S5, (0, 1) in a case where it is determined that the cursor is moved adjacently down).

After step S3, since the video acquisition processing section 220 displays the partial video which is acquired in step S3 on the tablet terminal 300, the partial video is transmitted to the tablet terminal 300 (step S4).

After step S4, the video acquisition processing section 220 determines whether or not the cursor is moved adjacently (in detail, adjacently above, adjacently below, adjacently left, and adjacently right) (step S5).

In a case where the television 200 determines that the cursor does not move adjacently in step S5, the process proceeds to step S6, and in a case where it is determined that the cursor is moved adjacently in step S5, the process returns to step S3.

In step S6, the video acquisition processing section 220 determines whether or not the program during reproduction has ended. In a case where the television 200 determines that the program has not ended in step S6, the process returns to step S5, and in a case where it is determined that the program has ended in step S6, the operation of the flow chart in Fig. 4 ends.

### (Advantage of Television 200)

The following can be said from description of the television 200 above.

That is, the television 200 (display processing device) is provided with an operation reception section (reception means, not shown in the drawings) which receives a selection of the partial video adjacent to the partial video which is a display target on the display surface of the tablet terminal 300 (specified display region) from within 16 full HD partial videos (plurality of partial videos) which configure full video (8K × 4K program video).

In addition, the television 200 is provided with the video acquisition processing section 220 (metadata acquisition means) which acquires the MPD data (metadata) in which each of the 16 full HD partial videos is indicated in association with the identifier (pair of the attribute value of the attribute i_x and the attribute value of the attribute i_y) and the acquisition destination (attribute value of the attribute src) of the partial video.

The video acquisition processing section 220 (video acquisition means) specifies with reference to the identifier of the partial video in which the acquisition destination of the selected adjacent partial video is indicated in the metadata, and acquires the partial video from the acquisition destination (distribution device 100). Furthermore, the video acquisition processing section 220 (display update means) updates the partial video of the display surface of the tablet terminal 300 to the acquired partial video.

In addition, in each identifier of the 16 full HD partial videos which are described in the MPD data, the identifier of the partial video adjacent to the partial video can be said to be an identifier which it is possible to specify without referencing other information.

According to the configuration above, the television 200 is able to specify the identifier of the partial video which a viewer desires to display on the display surface of the tablet terminal 300 without referencing other information that is described in the MPD data.

Consequently, the television 200 is also able to easily specify the acquisition destination of the partial video which is recorded in association with the identifier in the MPD data.

### (Supplementary Information 1 of Embodiment 1)

The MPD data is not limited to the MPD data as indicated in Fig. 3.

For example, the MPD data may be MPD data which is exemplified in Figs. 5, 6, or 7.

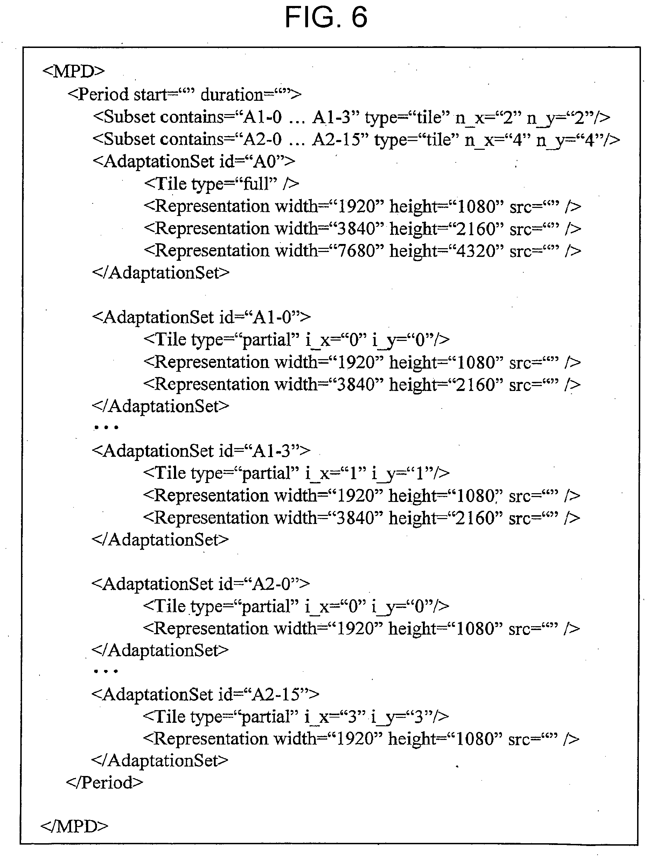

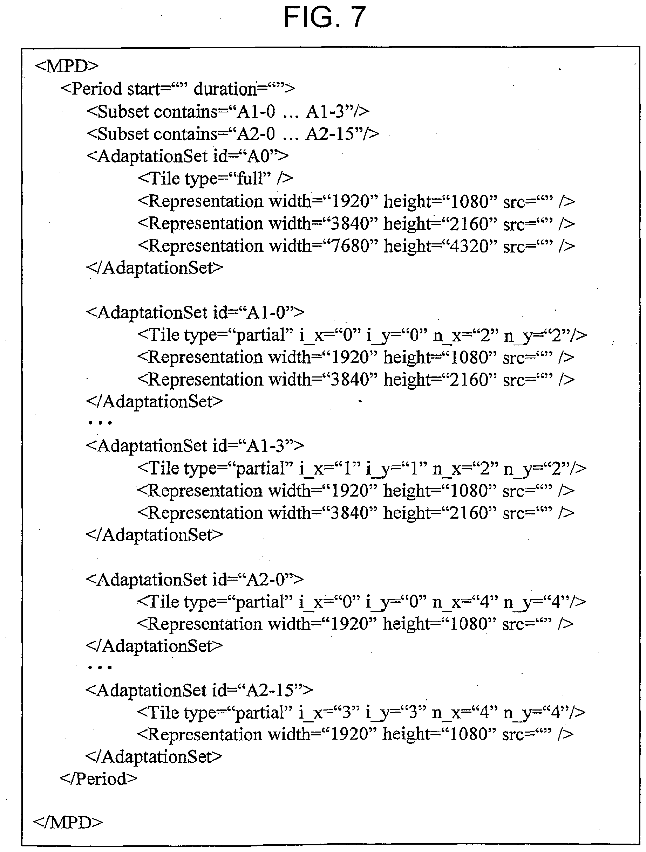

That is, as shown in Figs. 6 and 7, a Tile tag is described in place of the Role tag, and attribute type may be described in which it is indicated whether each video which corresponds to each Representation tag that is described immediately after the Tile tag is partial video or full video within Tile tags. An attribute value "full" of the attribute type may be an attribute value in which each video indicates full video, and an attribute value "partial" of the attribute type may be an attribute value in which each video indicates partial video.

In addition, as shown in Figs. 5 and 7, the attribute n_x and the attribute n_y may be described as the attribute of the Role tag and the Tile tag in place of being described as the attribute of the Subset tag.

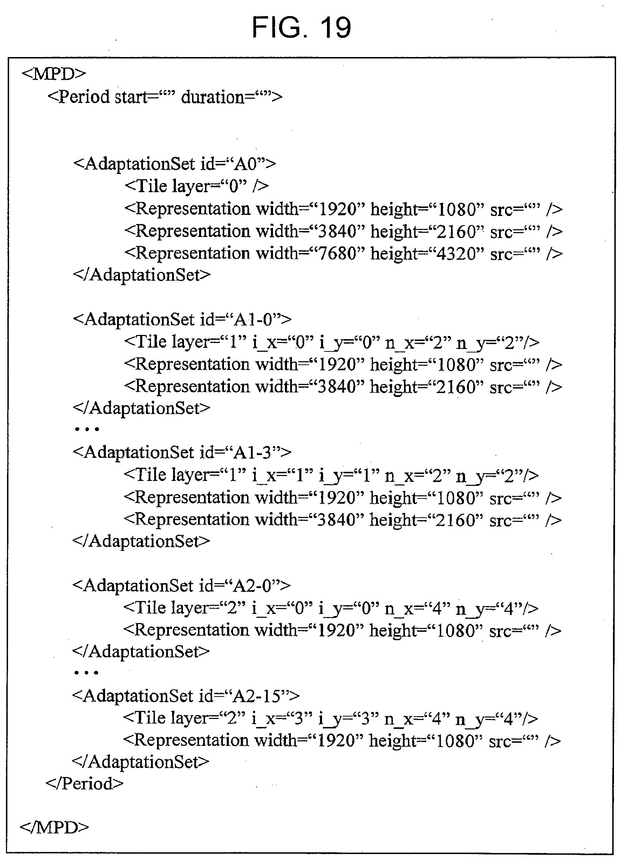

Alternatively, the MPD data may be MPD data which is exemplified in Fig. 19.

That is, in Tile tag, in place of attribute type, the attribute layer may be described that indicates to which layer each video belongs that corresponds to each Representation tag which is described immediately after the Tile tag. In addition, the attribute value "0" of the attribute layer may be an attribute value which indicates that each video belongs to layer 0 (that is, each video is full video). In the same manner, the attribute value "1" of the attribute layer may be an attribute value which indicates that each video belongs to layer 1 (each video is partial video of layer 1), and the attribute value "2" of the attribute layer may be an attribute value which indicates that each video belongs to layer 2 (each video is partial video of layer 2).

In addition, in a case where the number of splits of partial video in the attribute value of attribute layer (whether the partial video group divides and generates full video into a number of vertical pieces and a number of horizontal pieces) is determined, the attribute n_x and the attribute n_y may not be included as the attribute of the Tile tag.

### (Supplementary Information 2 of Embodiment 1)

The television 200 displays the partial video on the tablet terminal 300, but the television 200 is not limited to such a configuration. For example, the television 200 may display the acquired partial video by communication within a small screen (specified display region) which a portion of the display surface occupies while carrying out full screen display of the acquired full video from the broadcast wave on the display surface of the display section 250.

Here, the present embodiment indicates an example in which full video and partial video are acquired using both broadcast and communication, but is not limited thereto, and a configuration is also possible in which full video and partial video is acquired only in communication. In the same manner, a configuration is also possible in which full video and partial video is acquired only in broadcast.

### (Supplementary Information 3 of Embodiment 1)

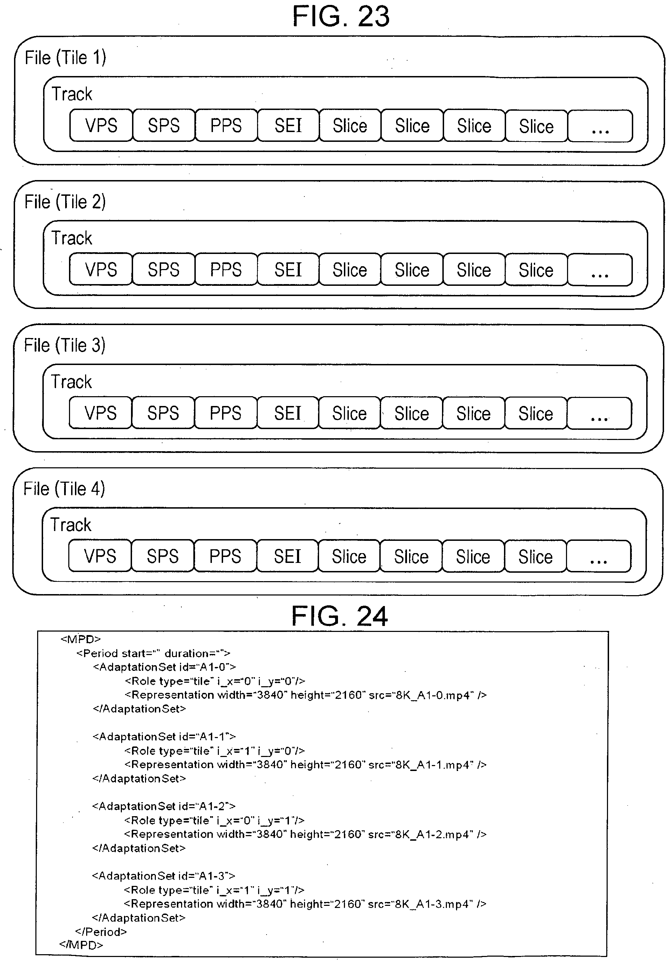

Description of an URL (Representation element src attribute value) which indicates the acquisition destination of partial video (tile) describes an example of a case of layer 1 of 8K × 4K video in Fig. 2. Here, concerning four 4K × 2K tiles in layer 1, upper left, upper right, lower left, and lower right tiles are respectively set as Tile 1, Tile 2, Tile 3, and Tile 4. The format and corresponding MPD data when data which is encoded using high efficiency video coding (HEVC) that is standardized by MPEG is stored in ISO base media file format (ISOBMFF) is described below using Figs. 23 to 30.

Fig. 23 is a diagram schematically illustrating a format in a case where each tile is different that is stored in a file. Each file is configured from one track, and a plurality of Slices which are equivalent to Video Parameter Set (VPS), Sequence Parameter Set (SPS), Picture Parameter Set (PPS), Supplemental Enhancement Information (SEI), and encoded data of the tile which is necessary in decoding processing are included in the track.

Fig. 24 is a diagram exemplifying MPD data in a case where a file format in Fig. 23 is used. In this case, since different file names are associated in Tile 1 to Tile 4, the respective file names are described in the URL which indicates the acquisition destination of the tile.

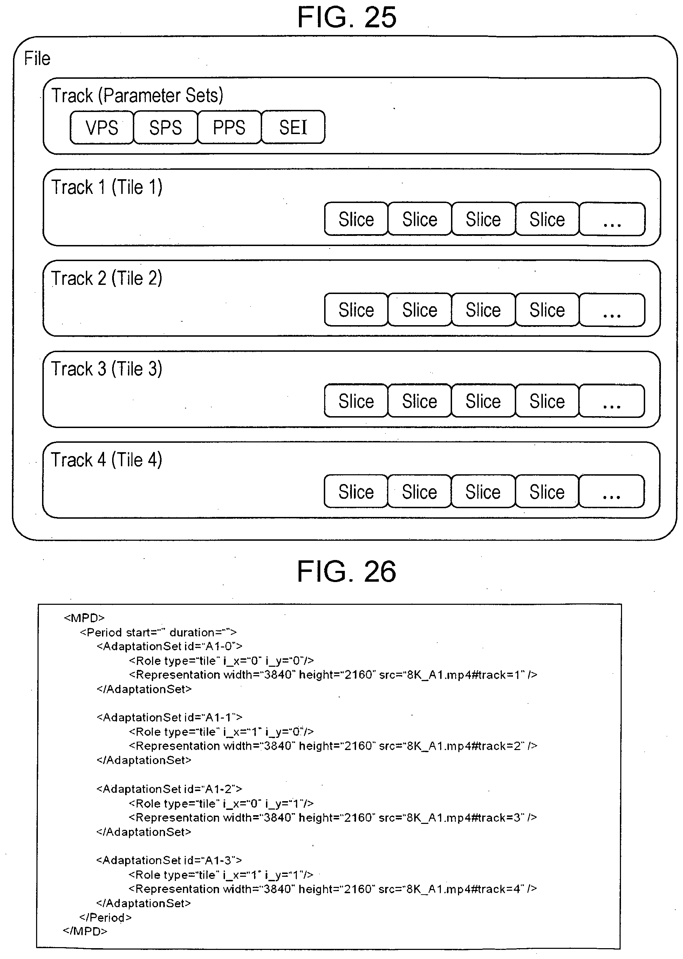

Fig. 25 is a diagram schematically illustrating a format in a case where each tile is different that is stored in the track. The file is configured from a total of five tracks of a track which includes parameter sets (VPS, SPS, PPS, and the like) which are necessary in decoding processing, and four tracks which are equivalent to encoded data of each tile.

Fig. 26 is a diagram exemplifying MPD data in a case where the file format in Fig. 25 is used. In this case, since it is not possible to identify a desired tile by only the file name in the URL which indicates the acquisition destination of the tile, the URL is described to which a URI fragment of track dimension (example: #track = 1) is added.

By describing in this manner, it is possible to identify whether it is possible to acquire the desired tile by the MPD level if some track within the file is extracted.

Here, in this case, data (VPS, SPS, PPS, and the like) which is included in a parameter set track and data (Slice) which is included in a track that is designated by a track dimension of the URI fragment is input and reproduced in the reproduction section 240.

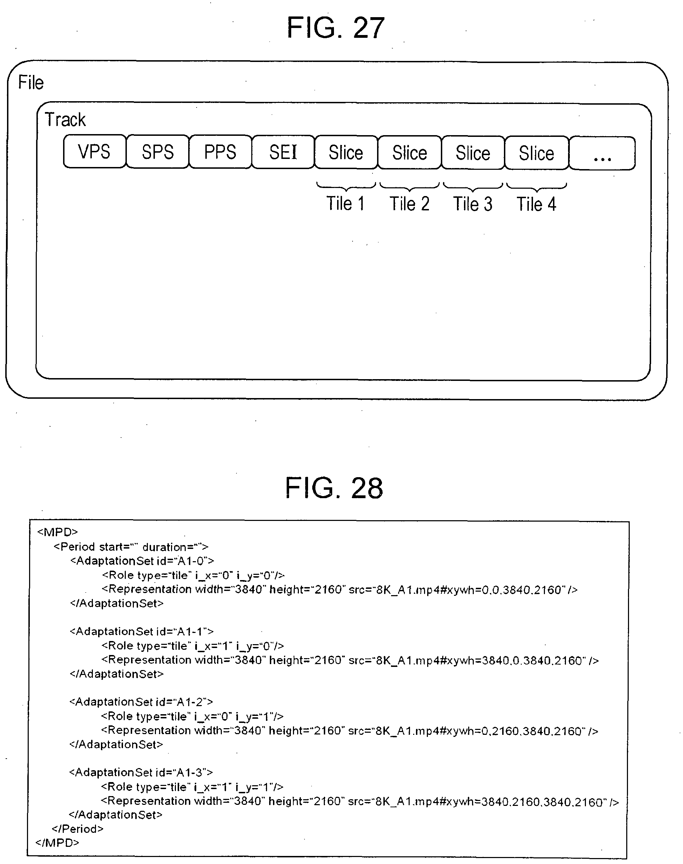

Fig. 27 is a diagram schematically illustrating a format in a case where all tiles are stored in one track. The file is configured from one track, and a parameter set which is necessary in decoding processing and a plurality of Slices which are equivalent to encoded data of each tile are included in the track.

Fig. 28 is a diagram exemplifying MPD data in a case where a file format in Fig. 27 is used. In this case, since it is not possible to identify a desired tile by only the file name in the URL which indicates the acquisition destination of the tile, the URL is described to which the URI fragment of spatial dimension (example: #xywh = 0, 0, 3840, 2160) is added.

By describing in this manner, it is possible to identify whether it is possible to acquire the desired tile by the MPD level if some region within the file is extracted.

Here, in this case, data (VPS, SPS, PPS, and the like) which is included in a parameter set track and data (Slice) in a region which is designated by a spatial dimension of the URI fragment is input and reproduced in the reproduction section 240.

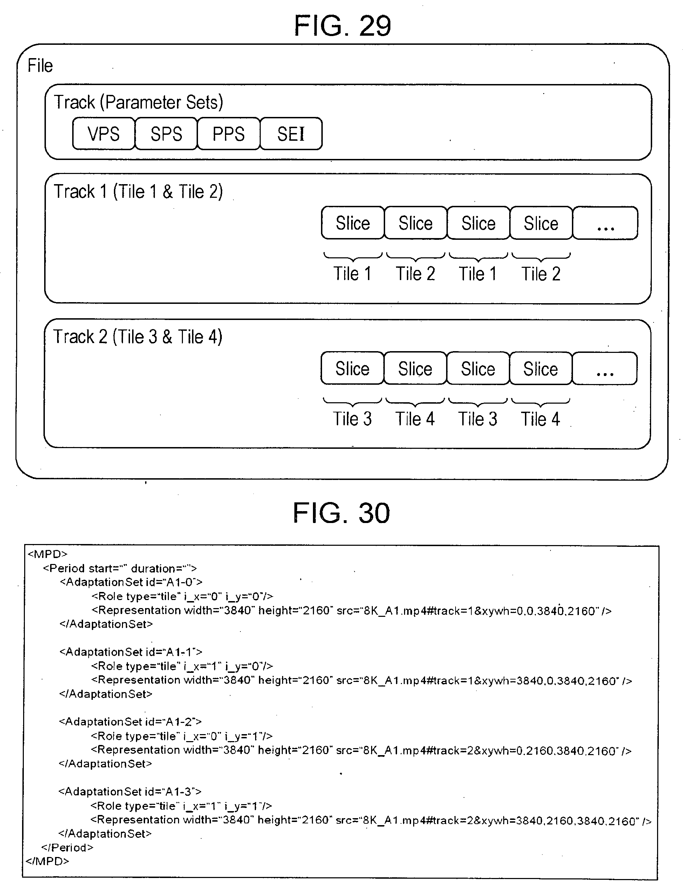

Fig. 29 is a diagram schematically illustrating a format in a case where a plurality of tiles are stored in a plurality of tracks. The file is configured from a total of three tracks of a track which includes parameter sets which are necessary in decoding processing, and two tracks which are equivalent to encoded data of the tile. Here, Tile 1 and Tile 2 in Track 1 are stored by Tile 3 and Tile 4 in Track 2.

Fig. 30 is a diagram exemplifying MPD data in a case where a file format in Fig. 29 is used. In this case, since it is not possible to identify a desired tile by only the file name in the URL which indicates the acquisition destination of the tile, the URL is described to which the URI fragment of track dimension and spatial dimension (example: #track = 1&xywh = 0, 0, 3840, 2160) is added.

By describing in this manner, it is possible to identify whether it is possible to acquire the desired tile by the MPD level if some region of some track within the file is extracted.

Here, in this case, data (VPS, SPS, PPS, and the like) which is included in the parameter set track, a track which is designated by track dimension of the URI fragment, and data (Slice) in a region which is designated by the spatial dimension of the URI fragment is input and reproduced in the reproduction section 240.

The description format of the URI fragment is not limited to the format above, and may be described using another format which is specified by MPEG-21 and the like.

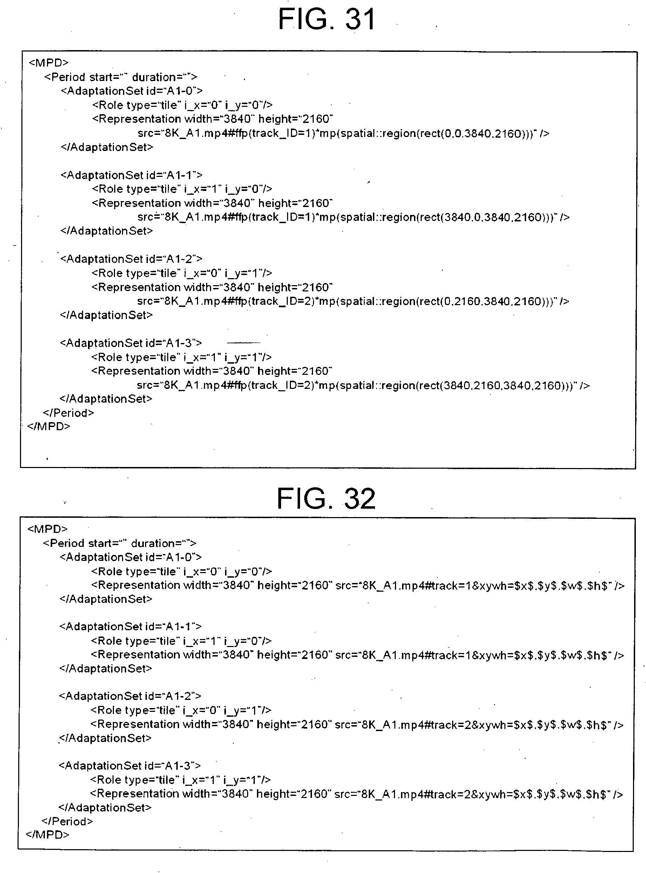

Fig. 31 is a diagram illustrating a modified example of the MPD data in a case where the file format in Fig. 29 is used. Here, the URI fragment is described in a format (example: #ffp(track_ID = 1)*mp(spatial::region(rect(0, 0, 3840, 2160)))) which is specified by MPEG-21 Part 17 (FragmentIdentification of MPEG Resources).

Fig. 32 is a diagram indicating another modified example of the MPD data in a case where the file format in Fig. 29 is used. Here, a value of xywh is described using a template format (example: #track = 1&xywh = $x$, $y$, $w$, $h$). In the client terminal, each value of $x$, $y$, $w$, and $h$ is derived from values of the i_x attribute and the i_y attribute of the Role element, values of the width attribute and the height attribute of the Representation element, and the like and replaced. For example, derived in the manner of the case of Tile 3 and below, xywh = 0, 2160, 3840, 2160.
$x$ = Role@i_x*Representation@width = 0*3840 = 0
$y$ = Role@i_y*Representatlon@height = 1*2160 = 2160
$w$ = Representation@width = 3840
$h$ = Representation@height = 2160

### (Supplementary Information 4 of Embodiment 1)

The example in Fig. 25 indicates a format of when tile data which is encoded using HEVC is stored in one ISOBMFF file. In the same manner, Figs. 27 and 29 are also examples of a format in which data of tiles which are encoded using HEVC are stored in one ISOBMFF file. In this case, using ISOBMFF, it is possible to carry out mapping on a storage position (reading position) of the tile data and the level of the index using subsegment index box. Thereby, it is possible to configure the MPD data in which a tile is described in a Sub-Representation level.

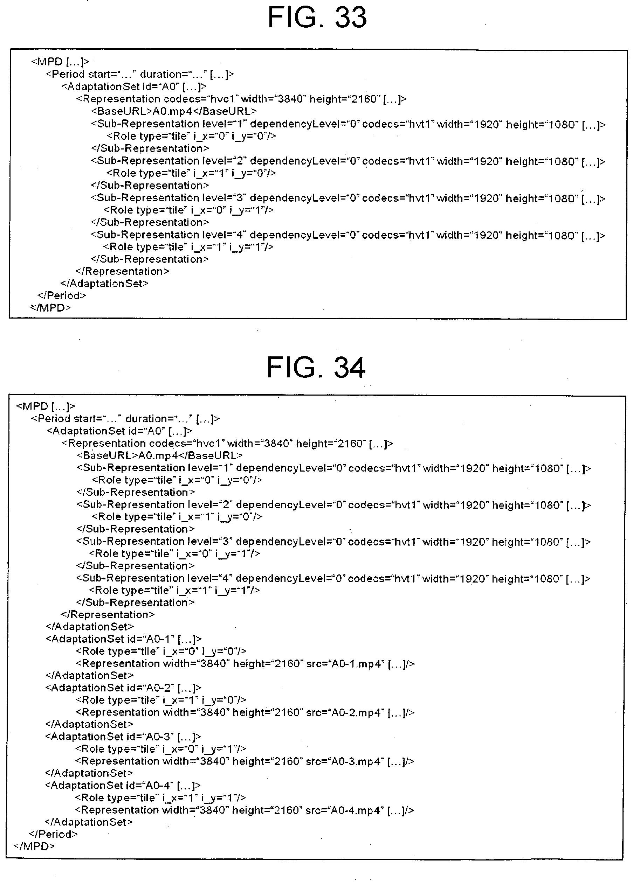

Fig. 33 is an example of MPD data in which the tile is described in the Sub-Representation level which corresponds to the format in Fig. 25. At this time, the URL (BaseURL element) which is applied to Representation indicates the file name of the file in which tile data is stored, and the level attribute which is applied to Sub-Representation indicates the storage position of the tile data within the file. The storage position is separately managed by BOX (subsegment index box) within ISOBMFF. For this reason, for example, in the format in Fig. 27 and the format in Fig. 29, MPD data is also represented in common in Fig. 33.

Fig. 34 is an example of MPD data in which a case is assumed in which the formats of Figs. 23 and 25 are mixed. That is, a case where one file in which all tile data is stored (each tile is written in the Sub-Representation level on the MPD data), and a plurality of files in which the tile data is respectively stored (each tile is written in the AdaptationSet level on the MPD data) are mixed. The example in Fig. 34 indicates a case where a 4K (3840 × 2160) file A0.mp4 includes a tile of 2K (1920 × 1080) size of upper left, upper right, lower left, and lower right, and the tiles of upper left, upper right, lower left, and lower right of the 4K (3840 × 2160) size are provided to be stored in files A0-1.mp4, A0-2.mp4, A0-3.mp4, and A0-4.mp4. As determined from the drawings, there are the next two problems in the MPD data in which the description of the tile of the AdaptationSet level and the description of the tile of the Sub-Representation level are mixed.
- It is not possible to immediately know presence or absence of the description of the tile (for example, uniformly at AdaptationSet level).
- The same tile (for example, the upper left tile of a 1/4 size) is written in a plurality of locations within the MPD data.

A method which solves these problems is indicated below.

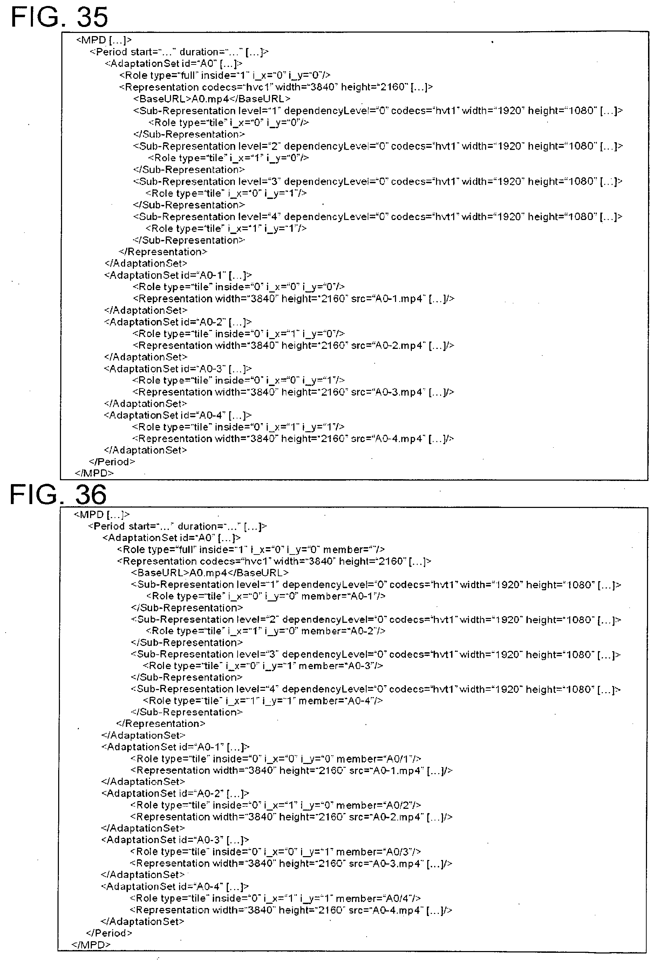

Fig. 35 is another example of MPD data in which a case is assumed in which the formats in Fig. 23 and Fig. 25 are mixed. In this example, a point in which the Role element is described in the AdaptationSet of a head (the tile of Sub-Representation level is described below), and a point in which an attribute inside is added to the Role element and the Role element below another AdaptationSet are different from the example in Fig. 34. Thereby, it is possible to uniformly know presence or absence of the description of the tile at the AdaptationSet level. That is, the conditions are set below.
- In a case where the tile is handled, the Role element below AdaptationSet is essential.
- An identifier inside which indicates whether or not the Role element (<Role type="tile"[...]>) that represents the tile below Sub-Representation is added to the Role element below the AdaptationSet.

The identifier inside is an identifier of 0, 1 which indicates whether or not Sub-Representation is present which includes the Role element that represents the tile below the AdaptationSet (below the Representation) to which the Role element is applied. A value 1 is set in a present case, and value 0 is set in a non-present case. Alternatively, other than the identifier of a 2 value of 0, 1, as addition to the Role element which is applied to the AdaptationSet of the

Period head (in a Period which initially appears), the AdaptationSet thereafter is also able to specify identifiers of three values that indicate whether the Role element is included in only the AdaptationSet (value 0), whether the Role element is included in only the Sub-Representation (value 1), and whether the Role element is arbitrarily included in both the AdaptationSet and the Sub-Representation (value 2). In this case, it is possible to reduce a processing amount according to determination of an amount of description by collectively determining description of the identifier inside in only AdaptationSet in the head. In this case, the identifier inside may be written as an attribute of the Period without the AdaptationSet of the head. Alternatively, with respect to the AdaptationSet which appears subsequently to the current AdaptationSet which includes the Role element, it is also possible to specify inside as the identifier of two bits which indicate whether or not the current AdaptationSet includes the Role element of the Sub-Representation level, and whether or not the subsequent AdaptationSet includes the Role element of the AdaptationSet level. In addition, the number value is not limited to 0, 1, and 2, and the identifier inside which sets the value of text may be defined. That is, the identifier inside may be information which is able to correctly identify whether or not the Role element which indicates the tile is the AdaptationSet level and the Sub-Representation level.

In addition, it is also possible to substitute the identifier by specifying a keyword in the type attribute value of the Role element. That is, "full-0", "tile-0", "full-1", and "tile-1" may be set as a keyword of the type attribute value, type = "full-0" and type = "tile-0" may indicate that there is no Role element which represents the tile of the Sub-Representation level under the AdaptationSet, and type = "full-1" and type = "tile-1" may indicate that there is the Role element which represents the tile of the Sub-Representation level. The manner is the same even if the layer attribute value is used in the keyword. Here, in that case, without the keyword as the text, it is possible to implement handling of byte data, and handling an uppermost one bit of a layer value as key bytes which represent presence or absence of Role element below the Sub-Representation.

Of course, the element which represents the tile is not limited to the Role element (Role tag), but may be the Tile element described above (Tile tag), or may be another element which is separately specified.

In addition, it is also possible to identify presence or absence of a tile of a Sub-Representation level from information which is included in the Representation element or the AdaptationSet element. For example, with respect to an attribute codecs which indicates an encoding method which is included in the Representation element, the value is described as codecs = "hvc1, hvt1". A value "hvt1" indicates adding HEVC tile encoding and storage processing of Representation (indicated by an MP4 file). For this reason, it is possible to know there is the Role element which represents the tile below the Sub-Representation by viewing the value. Here, accurately, the value "hvt1" only indicates adding the tile encoding and storage processing, and does not indicate that the Role element which represents tile below the Sub-Representation is necessary. When the value "hvt1" is indicated, a designer of a system or a service determines whether or not the Role element which represents the tile below the Sub-Representation is necessarily included. When necessarily included, similarly to inside, the attribute codecs corresponds to the identifier which identifies presence or absence of the tile of the Sub-Representation level.

Fig. 36 is another example of MPD data in which a case is assumed in which the formats of Fig. 23 and Fig. 25 are mixed. In the example, a point in which the attribute member is added to each Role element below the AdaptationSet and below the Sub-Representation is different from the example in Fig. 35. Thereby, it is clearly indicated that the same tile is written at a plurality of locations within the MPD data, and it is possible to specify the same tile which is written at a plurality of locations within the MPD data.

Identification information of AdaptationSet or identification information of Sub-Representation are described in which the same tile as the tile that the Role element represents is included in the attribute member. In the example in Fig. 36, an id value of AdaptationSet ("A0-1", "A0-2", and the like) is used in the identification information of the AdaptationSet, a value of $id$/$level$ format ("A0/1", "A0/2", and the like) which combines the AdaptationSet id which includes the Sub-Representation and the level value which identifies the Sub-Representation is used in the Sub-Representation identification information. The attribute member which is described in the Role element below the AdaptationSet of the head = "" clearly represents that there are no same tiles within the MPD data. In addition, although not shown in the drawings, in a case where there are a plurality of the same tiles, the identification information is described lined up in the member attribute. That is, when member = "A0-1 A1/1 A2/1 A3-1" is described in the Role element below the Sub-Representation (Sub-Representation which is identified in "A0/1") which initially appears in Fig. 36, four of AdaptationSet id = "A0-1", Sub-Representation level = "1" below the AdaptationSet id = "A1", Sub-Representation level = "1" below the AdaptationSet id = "A2", and AdaptationSet id = "A3-1" indicates that the Sub-Representation (of level = "1" below AdaptationSet id = "A0") is the same tile.

Of course, the Sub-Representation itself is provided with the id attribute, and a value may be described in the member. In the same manner, the Role element itself is provided with the id attribute, and a value may be described in the member. Of course, the element which represents the tile is not limited to the Role element (Role tag), but may be the Tile element described above (Tile tag), or may be another element which is separately specified. In addition, Fig. 36 appends the member attribute in Fig. 35, but is information in which the identifier inside which is indicated in Fig. 35 and the attribute member in Fig. 36 are independent, and it is also possible to configure MPD data which adds only the member attribute which does not include the identifier inside.

### (Supplementary Information 5 of Embodiment 1)

The MPD data is not limited to the MPD data as indicated in Figs. 3, 5, 6, or 7.

That is, for example, in the MPD data which is indicated in Fig. 5, the Representation tag of the full HD video, the Representation tag of 4K × 2K video, and the Representation tag of 8K × 4K video are described between the AdaptationSet start tag and the AdaptationSet end tag, and three videos which correspond to three Representation tags are only different in resolution (size), and the same content is indicated. The Representation tags of the videos are not necessarily collectively described in AdaptationSet (between AdaptaionSet start tag and AdaptaionSet end tag), and may be described in separate AdaptationSets.

However, the Representation tags of the videos have the subsequent two problems in the MPD data which is described in separate AdaptationSets.
- It is not possible to immediately know presence or absence of the video which belongs to the same resolution and layer (for example, uniformly at AdaptationSet level).
- It is not possible to immediately know presence or absence of video in which only the resolution (size) is different in the same content (for example, uniformly at AdaptationSet level).

For this reason, it is not possible to easily specify the presence or absence of video in which the viewer's device is desired by the viewer.

A method which solves these problems is indicated below.

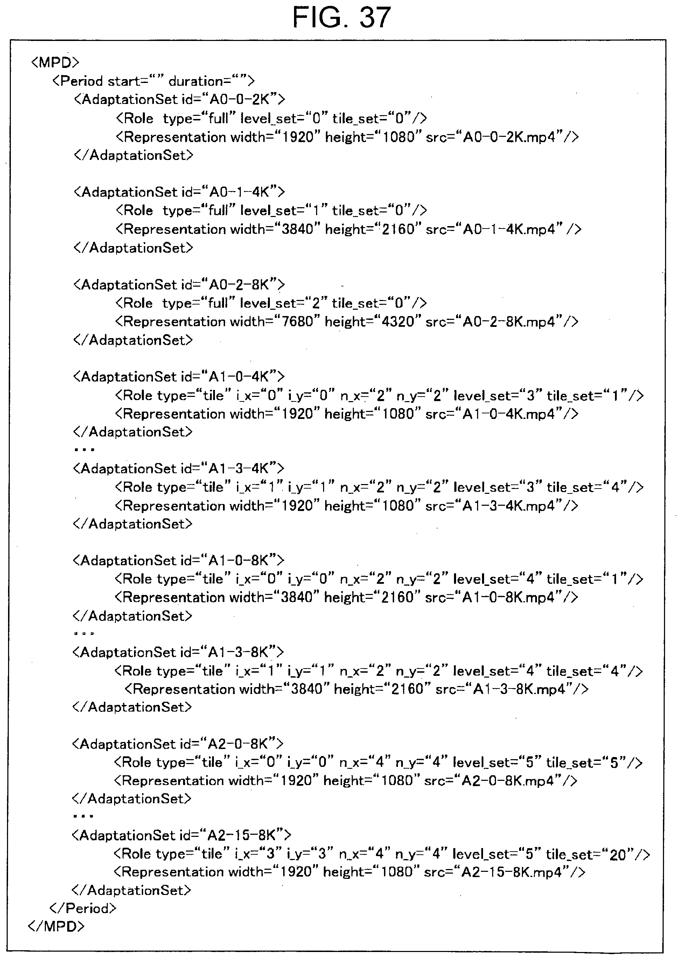

Fig. 37 indicates another example of the MPD data which is indicated in Fig. 5. In this example, a point in which the Subset tag is not described between the Period start tag and the Period end tag, a point in which the Representation tag of the video is described in separate AdaptationSets, and a point in which an attribute level_set and an attribute tile_set are added to the Role element below AdaptationSet are different from the example in Fig. 5. Thereby, it is possible to uniformly know, at the AdaptationSet level, the presence or absence of video which belongs to the same resolution and layer, and the presence or absence of video in which only the resolution is different in the same content. That is, the conditions are set below.
- The attribute level_set which represents the presence or absence of video which belongs to the same resolution and layer is added to the Role element below the AdaptationSet.
- The attribute tile_set which represents the presence or absence of video in which only the resolution is different in the same content is added to the Role element below the AdaptationSet.

The attribute level_set is an attribute that indicates which resolution and layer each video belongs to that corresponds to each Role element. For example, in Fig. 37, the attribute value "0" of attribute level_set is an attribute value which indicates that each video belongs to layer 0 of full HD video (that is, each video is full HD video). In the same manner, the attribute value "1" of the attribute level_set is an attribute value which indicates that each 4K × 2K video belongs to layer 0 (each video is partial video of layer 0 of 4K × 2K video), and the attribute value "2" of the attribute level_set is an attribute value which indicates that each 8K × 4K video belongs to layer 2 (each video is partial video of layer 2 of 8K × 4K video).

In addition, in a case where the number of splits of partial video in the attribute value of attribute level_set (whether the partial video group divides and generates full video into a number of vertical pieces and a number of horizontal pieces) is determined, the attribute n_x and the attribute n_y may not be included as the attribute of the Role element.

The attribute tile_set is an attribute that indicates which partial video group each video belongs to that are only different in resolution which correspond to each Role element. For example, in Fig. 37, the attribute value "0" of attribute tile_set is an attribute value which indicates that each video belongs to partial video group 0 (that is, each video is full video). In the same manner, the attribute value "1" of the attribute tile_set may be an attribute value which indicates that each video belongs to partial video group 1, and the attribute value "2" of the attribute tile_set is an attribute value which indicates that each video belongs to partial video group 2.

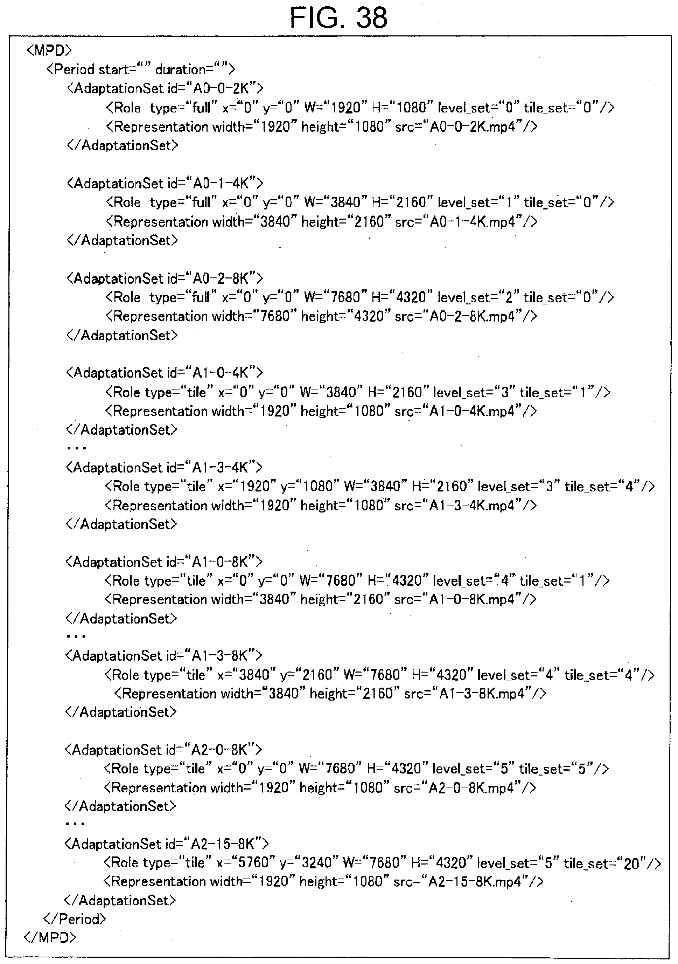

Here, the MPD data is not limited to the example in Fig. 37, and for example, may be the MPD data which is indicated in Fig. 38.

That is, as shown in Fig. 38, attribute i_x, attribute i_y, attribute n_x, and attribute n_y may not be described in Role element below the AdaptationSet, and attribute x, attribute y, attribute W, and attribute H may be described in Role element below the AdaptationSet. Thereby, it is possible to uniformly know, at the AdaptationSet level, the presence or absence of video which belongs to the same resolution and layer, and the presence or absence of video in which only the resolution is different in the same content.

The attribute x and the attribute y are respectively attributes which indicate the upper left coordinate of each partial video in a coordinate system in which the upper left coordinates of full video are (0, 0).

In addition, the attribute W and the attribute H are respectively attributes which indicate the size (width and height) of full video.

By describing such attribute level_set and attribute level_set in combination, even in the MPD data in which the Representation tag of the videos are described in separate AdaptationSets, it is possible to immediately know, in the AdaptationSet level, the partial video which belongs to the same resolution and layer and in which only the resolution is different in the same content.

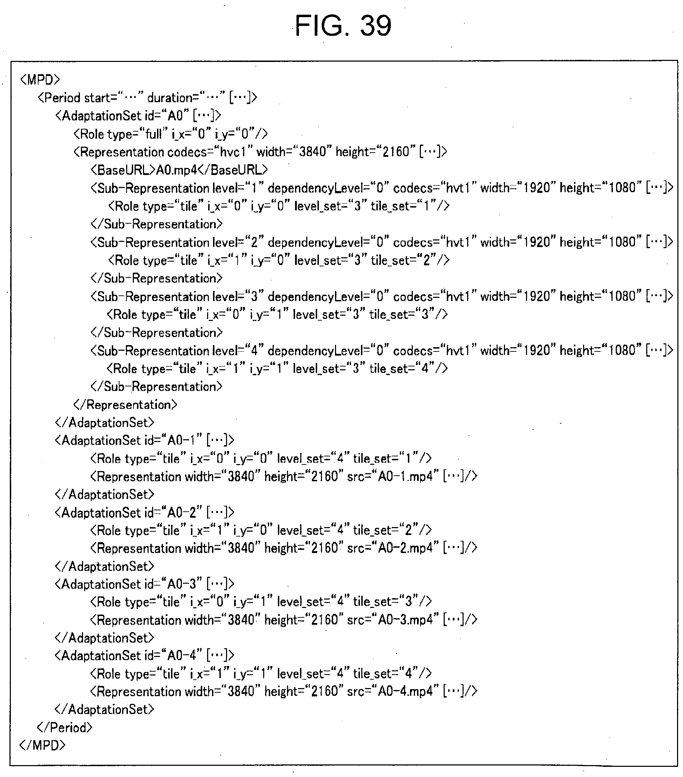

Furthermore, the MPD data is not limited to the example in Figs. 37 and 38, and for example, may be the MPD data which is indicated in Fig. 39.

That is, Fig. 39 is another example of the MPD data in which a case is assumed in which the formats of Fig. 23 and Fig. 25 are mixed. In the example, a case where one file in which all tile data is stored (each tile is written in the Sub-Representation level on the MPD data), and a plurality of files in which the tile data is respectively stored (each tile is written in the AdaptationSet level on the MPD data) are mixed is indicated. That is, a point in which the attribute level_set and the attribute tile_set are described to the Role element below the Sub-Representation, and a point in which the attribute inside of the Role element below the AdaptationSet of a head (the tile of the Sub-Representation level is described below) and of the Role element below another AdaptationSet is deleted are different from the example in Fig. 35. Thereby, it is possible to know, at the Sub-Representation level and the AdaptationSet level, the presence or absence of video which belongs to the same resolution and layer, and the presence or absence of video in which only the resolution is different in the same content.

Here, in Figs. 37, 38, and 39, both attribute values of the attribute level_set and the attribute tile_set are described in each Role element, but are not limited thereto, and a configuration is also possible in which only the attribute level_set is described, and which represents the presence or absence of video which belongs to the same resolution and layer. Similarly, a configuration is also possible in which only the attribute tile_set is described, and which represents the presence or absence of video in which only the resolution is different in the same content.

### (Modified Example of Embodiment 1)

The rectangular cursor described above may be a cursor which is able to move one dot at a time vertically and horizontally. Then, the television 200 may display the partial video which corresponds to the cursor position on the tablet terminal 300.

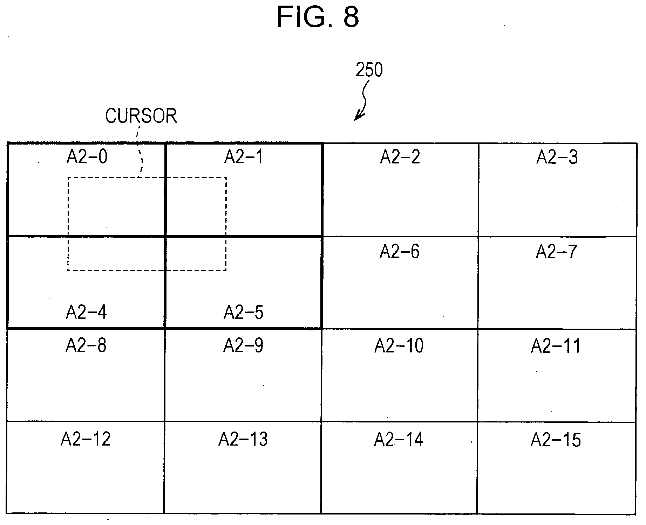

In this case, it is necessary for the television 200 to generate the partial video which corresponds to the cursor position in a normal case (that is, as shown in Fig. 8, a case in which the partial video that corresponds to the cursor position is not partial video which is acquirable from the distribution device 100). For this reason, the television 200 may perform the processes below.

That is, the television 200 may specify the acquisition destination of a plurality of partial videos which are necessary in order to generate the partial video which corresponds to the cursor position and acquire the specified plurality of partial videos from within the MPD data based on the left upper coordinates, width, and height of the cursor. Then, a process may be performed in which an unnecessary portion is cut out from each partial video, and the partial video which corresponds to the cursor position may be generated by joining the plurality of partial videos after processing.

Then, the television 200 may display the generated partial video on the tablet terminal 300.

### [Embodiment 2]

A distribution system according to another embodiment of the present invention is described below. Here, for convenience of explanation, members which have completely the same function or substantially the same function of the members which are described in the embodiment above are notated with the same reference numerals, and the description thereof is basically omitted.

The distribution system according to the present embodiment includes a distribution device, and a client terminal.

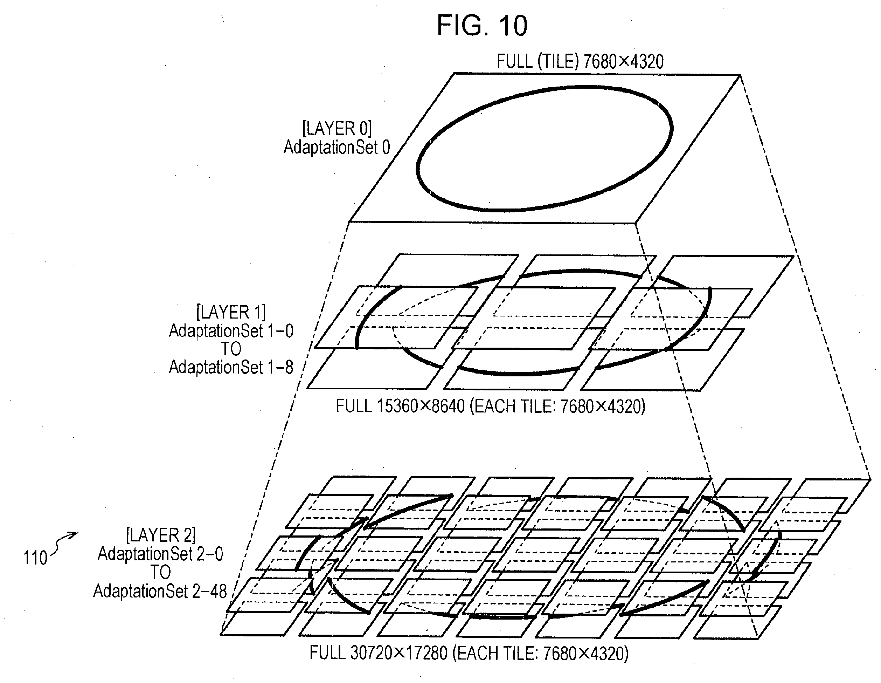

An imaging video group (Fig. 10) which is obtained by camera photography is held in the distribution device.

The imaging video group which is held in the distribution device is specifically generated as below.

First, imaging video (full video) of ultra-high resolution (32K × 16K: layer 2), imaging video (full video) of high resolution (16K × 8K: layer 1), and imaging video of medium resolution (8K × 4K: layer 0) are generated by a camera which captures the object.

Next, nine 8K × 4K partial videos are generated which are configured by the imaging video from the imaging video of high resolution (layer 1). In detail, nine 8K × 4K partial videos are generated such that two arbitrary partial videos which are positioned adjacent to each other include common images such that a proportion that occupy each partial image is 50%. In more detail, nine 8K × 4K partial videos are generated below.
- A partial video of a region which is enclosed by four points of (0, 0), (7680, 0), (0, 3840), (7680, 3840) in a coordinate system in which the upper left coordinates (0, 0) of high resolution imaging video are set
- A partial video of a region which is enclosed by four points of (3840, 0), (11520, 0), (3840, 3840),(11520, 3840) in the coordinate group
- A partial video of a region which is enclosed by four points of (7680, 0), (15360, 0), (7680, 3840),(15360, 3840) in the coordinate group
- A partial video of a region which is enclosed by four points of (0, 1920), (7680, 1920), (0, 5760), (7680, 5760) in the coordinate group
- A partial video of a region which is enclosed by four points of (3840, 1920), (11520, 1920), (3840, 5760), (11520, 5760) in the coordinate group
- A partial video of a region which is enclosed by four points of (7680, 1920), (15360, 1920), (7680, 5760), (15360, 5760) in the coordinate group
- A partial video of a region which is enclosed by four points of (0, 3840), (7680, 3840), (0, 7680), (3840, 7680) in the coordinate group
- A partial video of a region which is enclosed by four points of (3840, 3840), (11520, 3840), (3840, 7680), (11520, 7680) in the coordinate group
- A partial video of a region which is enclosed by four points of (7680, 3840), (15360, 3840), (7680, 7680), (15360, 7680) in the coordinate group

Here, the proportion described above is referred to below as "overlap ratio".

Furthermore, 49 8K × 4K partial videos are generated which are configured by the imaging video from the imaging video of ultra-high resolution (layer 2) by the method in the same manner.

Of course, the generation method is one example. For example, 16 cameras may be prepared which capture the 8K × 4K partial video, and the combination of 16 partial videos may be set as the imaging video of a virtual ultra-high resolution (layer 2). 33 (49 - 16) remaining layer 2 partial videos are generated so as to include common images such that a proportion that occupy each partial image is 50% from 16 partial videos. Next, high resolution (16K × 8K) video is temporarily generated from four adjacent 8K × 4K partial videos without overlapping up and down, left and right, and nine layer 1 partial videos are generated by down sampling the videos to 8K × 4K. Furthermore, high resolution (16K × 8K) video is temporarily generated from four partial videos outside layer 1, and layer 0 videos are generated by down sampling the videos to 8K × 4K. In this manner, the partial video group in Fig. 10 is obtained.

The distribution device distributes the 8K × 4K full video which is generated by the method as the layer 0 video.

In addition, the distribution device distributes the 8K × 4K partial video group which is generated by the method as the layer 1 video.

In addition, the distribution device distributes the 8K × 4K partial video group which is generated by the method as the layer 2 video.

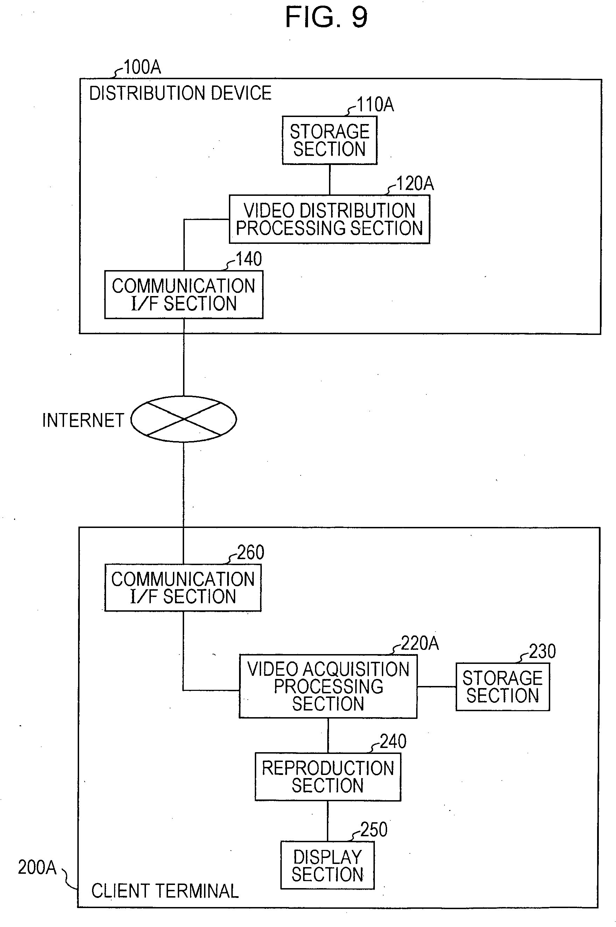

A main configuration of the distribution device and the client terminal is described below with reference to Fig. 9 and Fig. 10. Fig. 9 is a block diagram illustrating a main configuration of the distribution device and the client terminal according to Embodiment 2. Fig. 10 is a diagram schematically and in outline illustrating each layer video. Here, in Fig. 10, the overlap ratio of the partial video and partial video adjacently above (adjacently below) is reflected, but from the viewpoint of simplification of the drawings, the overlap ratio of the partial video and partial video adjacently right (adjacently left) is not reflected.

### (Distribution Device 100A)

As shown in Fig. 9, a distribution device 100A is provided with a storage section 110A, a video distribution processing section 120A, and the communication I/F section 140.

### (Storage Section 110A)

The storage section 110A is a recording medium which holds the layer 0 video group (the 8K × 4K imaging video (full video)) which is indicated in Fig. 10. The layer 1 video group (nine 8K × 4K partial videos which are generated from high resolution imaging video) and the layer 2 video group (forty nine 8K × 4K partial videos which are generated from ultra-high resolution imaging video) which are indicated in Fig. 10 are held in the recording medium.

### (Video Distribution Processing Section 120A)

The video distribution processing section 120A distributes MPD data to the client terminal 200A through the communication I/F section 140.

In addition, the video distribution processing section 120A distributes a requested video to the client terminal 200A from the client terminal 200A in which the MPD data is referenced.

### (Client Terminal 200A)

As shown in Fig. 9, the client terminal 200A is provided with a video acquisition processing section 220A, the storage section 230, the reproduction section 240, the display section 250, and the communication I/F (communication interface) section 260.

### (Video Acquisition Processing Section 220A)

The video acquisition processing section 220A acquires the MPD data (metadata) which relates to the imaging video that is distributed by the distribution device 100A via the communication I/F section 260, and records the acquired MPD data in the storage section 230.

In addition, the video acquisition processing section 220A references the acquisition destination of the imaging video which is selected by the user that is included in MPD data, and the imaging video is acquired from the distribution device 100A which is the acquisition destination.

### (Reproduction Section 240)

The reproduction section 240 reproduces the imaging video which is acquired from the distribution device 100A based on the MPD data, and the imaging video is displayed on the display section 250.

### (Display Section 250)

There is a display on which the imaging video is displayed full screen.

Here, the pointer is displayed to be superimposed on the imaging video between the layer 1 or the layer 2 imaging video (partial video) which is displayed on the display section 250. The pointer moves one dot at a time in the lateral direction and the vertical direction. The user is able to switch the displayed partial video to partial video in the movement direction by moving the pointer through the operation section (not shown in the drawings).

### (MPD data)

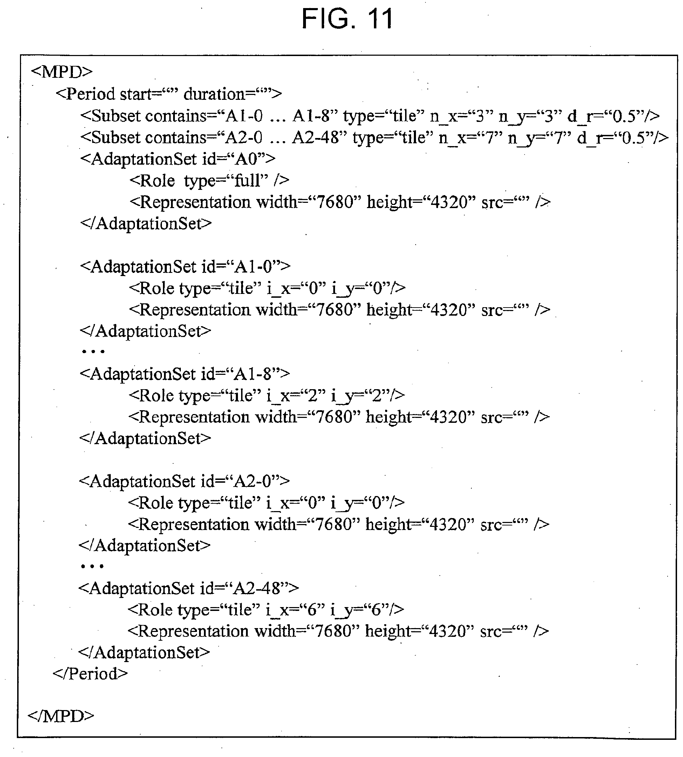

Next, MPD data which is distributed by the distribution device 100A will be described below with reference to Fig. 11.

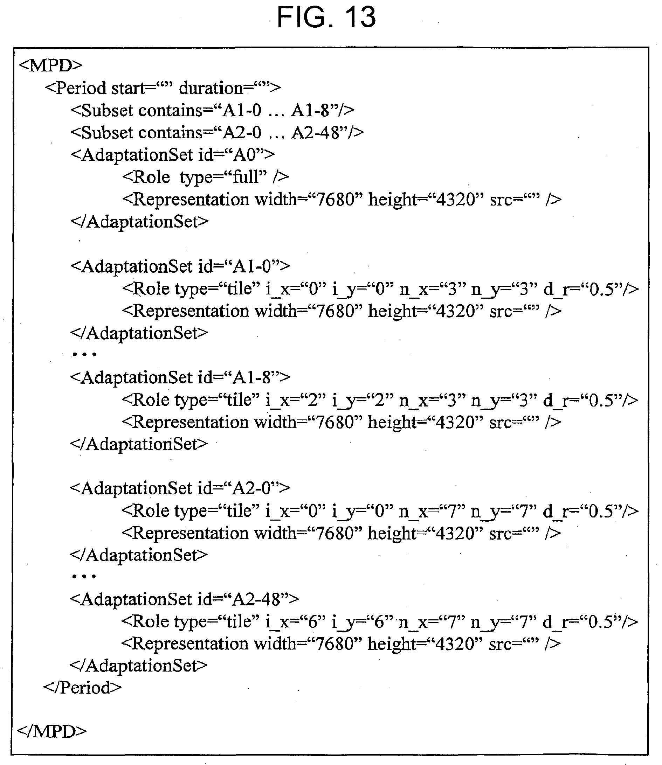

Fig. 11 is a diagram which exemplifies the MPD data. Here, Fig. 11 (similarly in Figs. 13, 20 and 21 which will be described later) omits description of a portion of information (for example, an attribute value of the attribute src) from the viewpoint of simplification of the drawings.

As understood viewing Fig. 11, the MPD data in Fig. 11 is the same as the MPD data in Fig. 3 except for a point of the attribute d_r which is included in the Subset tag.

The attribute d_r will be described below. Here, description of the tags and attributes in Embodiment 1 is omitted in the present embodiment.

The attribute value of the attribute d_r which is included in the SubSet tag in which the attribute value of the attribute contains is "A1-0...A1-8" indicates an overlap ratio of two arbitrary layer 1 partial videos (in detail, two arbitrary imaging videos which are positioned adjacently to each other).

In the same manner, the attribute value of the attribute d_r which is included in the SubSet tag in which the attribute value of the attribute contains is "A2-0...A2-48" indicates an overlap ratio of two arbitrary layer 2 partial videos (in detail, two arbitrary imaging videos which are positioned adjacently to each other).

The MPD data is described above.

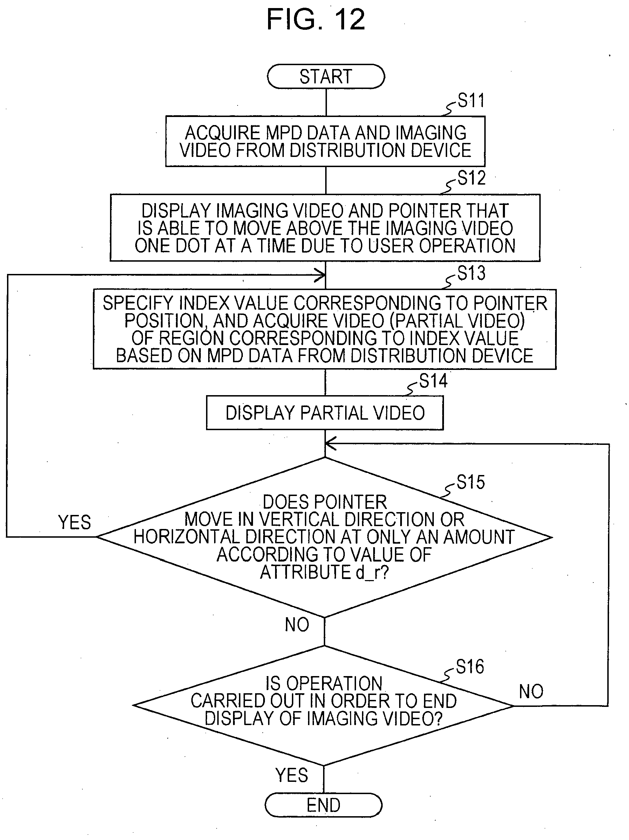

Next, the operation of the client terminal 200A is described with reference to Fig. 12. Here, as a premise, the client terminal 200A is set so as to reference the AdaptationSet of layer 2 in order to display the 8K × 4K partial video.

### (Operation of the Client Terminal 200A)

Fig. 12 is a flow chart displaying the operation of the client terminal 200A.

As shown in Fig. 12, the video acquisition processing section 220A of the client terminal 200A initially acquires the MPD data and the imaging video (step S11). In detail, the video acquisition processing section 220A acquires the MPD data from the distribution device 100A by communication. Then, the video acquisition processing section 220A references the attribute value (URL) of the attribute src which relates to 8K × 4K full video that is included in the MPD data, and acquires the full video from the acquisition destination (distribution device 100A) which is indicated by the URL.

After step S11, the reproduction section 140 reproduces the full video acquired in step S11 and carries out full screen display on the display section 250, and the pointer is displayed on the upper left corner of the display section 250 (step S12).

After step S12, in step S13, the video acquisition processing section 220A specifies the index value which corresponds to the current pointer position.

In detail, in a case where a step immediately before step S13 is step S12, the index value (0, 0) is specified which corresponds to the position of the pointer (upper left corner of the display section 250).

In addition, in a case where a step immediately before step S13 is step S15, it is possible to specify the index value by adding (1, 0), (-1, 0), (0, 1) or (0, -1) with respect to the index value which is specified the previous time in step S13. For example, in step S15, in a case where it is determined that the pointer of only dots with the amount of movement (specific value Q × (1-0.5)) according to the attribute value "0.5" of attribute d_r moves in the right direction, it is possible to specify the index value by adding (1, 0) with respect to the previously specified index value.

Here, the attribute value of the attribute d_r is not limited to 0.5, may be a value larger than 0.5 (for example, 0.75), and may be a value smaller than 0.5 (for example, 0.25). In a case where the attribute value of the attribute d_r is 0.75, the amount of movement according to the attribute value of the attribute d_r may be Q × (1-0.75) dots. In addition, in a case where the attribute value of the attribute d_r is 0.25, the amount of movement according to the attribute value of the attribute d_r may be Q × (1-0.25) dots.

Then, in step S13, the video acquisition processing section 220A references the MPD data, and specifies the acquisition destination of the partial video which corresponds to the specified index value. For example, in a case where the specified index value is (1, 0), the Role tag such that the attribute value of attribute i_x is 1 and the attribute value of attribute i_y is 0 is retrieved from within the MPD data, and the attribute value of the attribute src which is included in the element AdaptationSet which includes such a Role tag is specified. Furthermore, in step S13, the video acquisition processing section 220A acquires partial video from the specified acquisition destination (distribution device 100A).

After step S13, the video acquisition processing section 220A carries out full screen display of the partial video which is acquired in step S13 on the display section 250 (step S14).

After step S14, the video acquisition processing section 220A determines whether or not the pointer is moved in a horizontal direction or a vertical direction only by an amount according to the attribute value of the attribute d_r (step S15).

In a case where the client terminal 200A determines in step S15 that the pointer is moved only an amount according to the attribute value of the attribute d_r in the horizontal direction (rightward or leftward) or a vertical direction (upward or downward), the process returns to step S13. Meanwhile, in a case where the client terminal 200A determines in step S15 that the pointer is not moved only an amount according to the attribute value of the attribute d_r in the horizontal direction and the vertical direction, the process proceeds to step S16.

In step S16, the video acquisition processing section 220A determines whether or not the operation for ending the display of the imaging video is established. In a case where the client terminal 200A determines in step S16 that the operation is not established, the process returns to step S15, and in a case where the client terminal 200A determines in step S16 that the operation is established, the operation according to the flow chart in Fig. 12 ends.

### (Supplementary Information of Embodiment 2)

The MPD data is not limited to the MPD data as indicated in Fig. 11.

For example, the MPD data may be MPD data which is exemplified in Fig. 13.

That is, as shown in Fig. 13, each of the attribute n_x, the attribute n_y, and the attribute d_r may be set as the attribute of each Role tag in place of setting each Subset tag attribute.

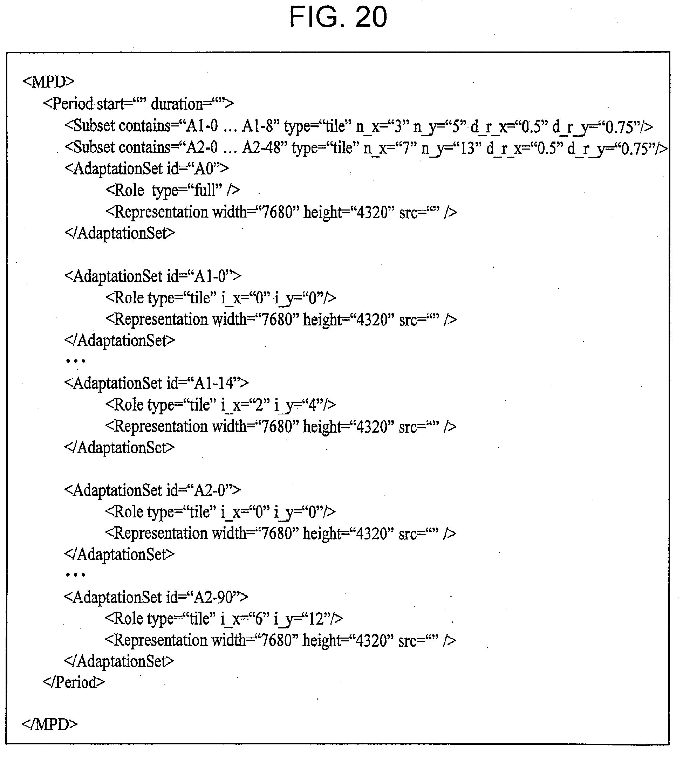

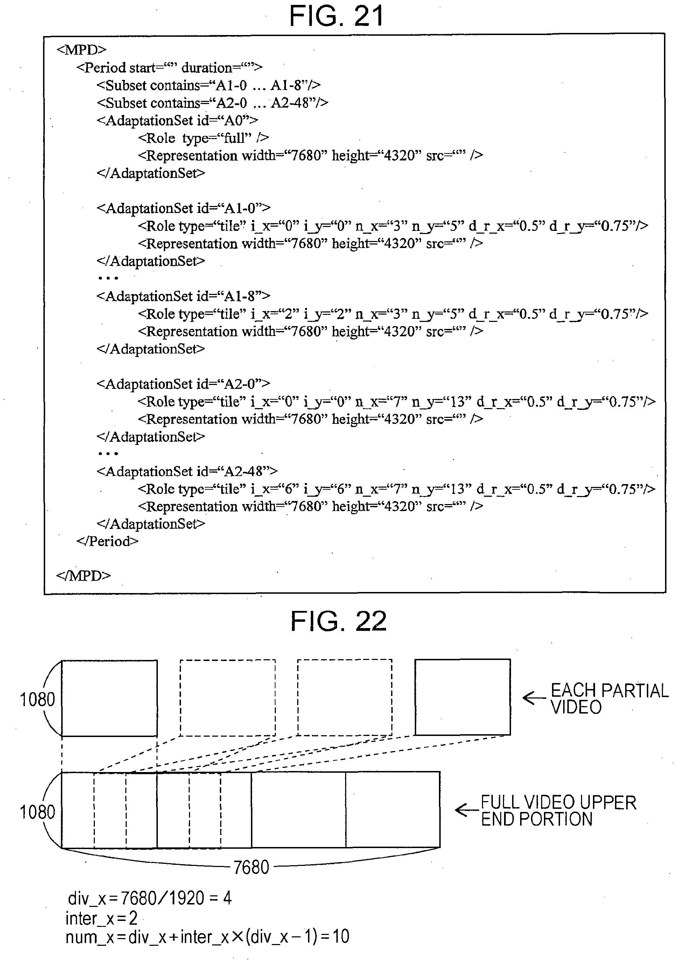

Alternatively, the MPD data may be MPD data which is exemplified in Fig. 20, or Fig. 21.

The MPD data which is exemplified in Fig. 20, or Fig. 21 is appropriately used in a case where the overlap ratio of the partial video and partial video adjacently above (adjacently below) and the overlap ratio of the partial video and partial video adjacently left (adjacently right) are different.

In the MPD data which is exemplified in Fig. 20, or Fig. 21, a value which indicates the overlap ratio of the latter (left and right) is described as the attribute value of an attribute d_r_x, and a value which indicates the overlap ratio of the former (up and down) is described as the attribute value of an attribute d_r_y.

Here, each attribute n_x, attribute n_y, attribute d_r_x, and attribute d_r_y may be an attribute of each Subset tag as shown in Fig. 20, and may be an attribute of each Role tag as shown in Fig. 21.

In addition, in place of the MPD data in Fig. 20, the MPD data may be used in which six attributes (attribute div_x, attribute div_y, attribute inter_x, attribute inter_y, attribute num_x, and attribute num_y) which are described above are described in place of attribute n_x, attribute n_y, attribute d_r_x, and attribute d_r_y.

Six attributes which are described in the MPD data are described below with reference to Fig. 22. Fig. 22 is a diagram for describing the MPD data.

The attribute value of the attribute div_x is a value which is obtained by dividing the horizontal width of the full video by the horizontal width of the partial video. In the example in Fig. 22, since the horizontal width of the full video has 7680 dots, and the horizontal width of each partial video has 1920 dots, the value div_x is 4. That is, the number of splits is represented when there is no overlapping in the partial video.

The attribute value of the attribute inter_x is a value positioned at a position between two specific partial videos (two partial videos which are represented by a solid line in Fig. 22) in which there is no adjacent overlapping left and right, and indicates a number of partial videos (partial videos which are represented by a dotted line in Fig. 22) that are not specific partial videos. That is, the number of partial videos which are inserted between two partial videos (specific partial videos) that do not overlap is represented. Here, in a coordinate system in which the specific partial video sets the left upper coordinates of the full video to (0, 0), a partial video is indicated in which an x component of the upper left coordinates is an integer multiple of the horizontal width, and a y component of the upper left coordinates is an integer multiple of the vertical width. In addition, "the partial video which are not specific partial videos are positioned between two adjacent specific partial videos" precisely has the meaning of "the upper left coordinates of the partial video which are not specific partial videos are positioned on the line which links upper left coordinates of one specific partial video and upper left coordinates of another specific partial video". Here, in the example in Fig. 22, the value inter_x is 2.

The attribute value of the attribute num_x is a value indicating the number of partial videos per row. In the example in Fig. 22, the value num_x is 10 (= 4 + 2 × (4 - 1)).

In the same manner, the attribute value of the attribute div_y is a value which is divided by dividing the vertical width of the full video by the vertical width of the partial video, and the attribute value of the attribute inter_y is a value which indicates the number of partial videos which are not specific partial videos between two adjacent specific partial videos up and down. In addition, the attribute value of the attribute num_y is a value indicating the number of partial videos per column.

As above, it is possible to calculate num_x (num_y) from div_x, inter_x (div_y, inter_y) . In the same manner, it is also possible to calculate div_x, inter_x (div_y, inter_y) from another two. For this reason, at least one of num_x, div_x, inter_x (num_y, div_y, inter_y) may be set without writing to the MPD data.

### [Embodiment 3]

A distribution system according to yet another embodiment of the present invention is described below. Here, for convenience of explanation, members which have completely the same function or substantially the same function of the members which are described in the embodiment above are notated with the same reference numerals, and the description thereof is basically omitted.

The distribution system according to the present embodiment includes a distribution device, a television, and a tablet terminal in the same manner as in Embodiment 1.

The distribution device distributes full HD program video, 4K × 2K program video, and 8K × 4K program video which relate to the same program by broadcasting, and the television displays the program video (8K × 4K program video) according to the resolution of the display panel (8K × 4K) of the distribution device.

In addition, the distribution device includes the full HD partial video group which is generated from the 4K × 2K program video (full video) using the method in the same manner as Embodiment 2 and the 4K × 2K partial video group which is generated from the 8K × 4K program video (full video) using the method in the same manner as Embodiment 2. That is, the overlap ratio of two arbitrary partial videos which are positioned adjacently to each other is 0.5. The distribution device distributes the partial video to the television by communication according to the request from the television, and the television displays the partial video which is received from the distribution device on the tablet terminal.

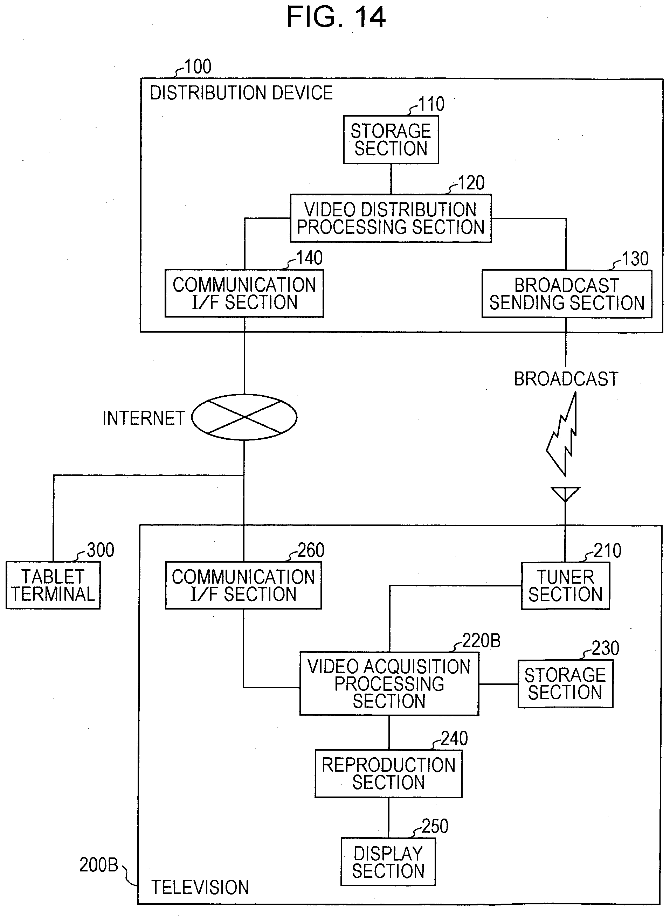

A main configuration of the television according to the present embodiment is described below with reference to Fig. 14. Fig. 14 is a block diagram illustrating a main configuration of the distribution device and the television according to Embodiment 3. Here, since the main configuration of the distribution device according to the present embodiment is the same as the distribution device according to Embodiment 1, the description of the main configuration of the distribution device according to the present embodiment is omitted. In addition, since the tablet terminal according to Embodiment 3 is the same as the tablet terminal according to Embodiment 1, description of the tablet terminal according to Embodiment 3 is omitted.

### (Television 200B)

As shown in Fig. 14, a television 200B according to the present embodiment is provided with the tuner section 210, a video acquisition processing section 220B, the storage section 230, the reproduction section 240, the display section 250, and the communication I/F (communication interface) section 260.

### (Video Acquisition Processing Section 220B)

The video acquisition processing section 220B acquires the MPD data (metadata) which relates to the program video that is distributed by the distribution device 100 via the tuner section 210, and records the acquired MPD data in the storage section 230.

In addition, the video acquisition processing section 220B references the acquisition destination of the partial video which is selected by the user that is included in the MPD data, and the partial video is acquired from the distribution device 100 which is the acquisition destination. Then, the video acquisition processing section 220B transmits the acquired partial video to the tablet terminal 300.

Furthermore, the video acquisition processing section 220B references the acquisition destination of the partial video that is to be displayed on the tablet terminal 300 at a specified time that is included in the MPD data, and the partial video is acquired from the distribution device 100 at a timing (for example, five seconds before the specified time) at which the partial video is displayed on the tablet terminal 300 at the specified time. Then, the video acquisition processing section 220B transmits the acquired partial video to the tablet terminal 300 immediately before the specified time.

### (Display Section 250)

The display section 250 is a display which displays 8K × 4K program video.

Here, the pointer in the same manner as Embodiment 2 is displayed to be superimposed on the 8K × 4K program video. The user is able to select an arbitrary partial video by moving the pointer using a remote controller (not shown in the drawings) of the television 200.

### (MPD data)

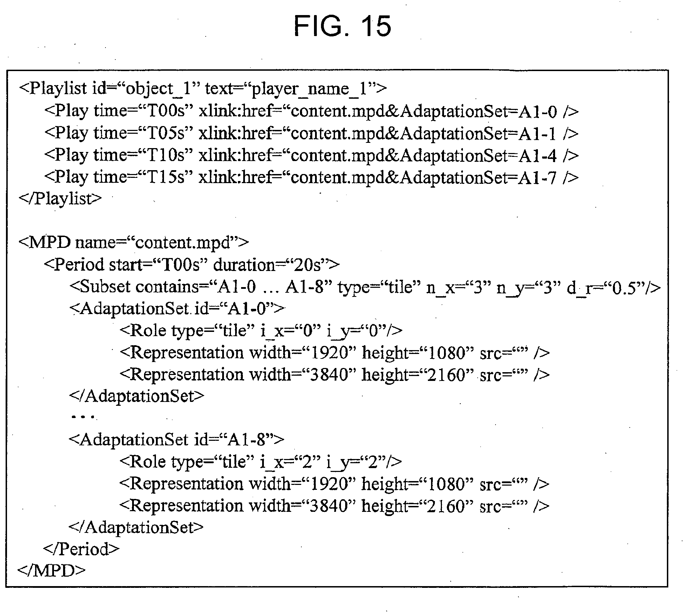

Next, metadata which is distributed by the distribution device 100 will be described below with reference to Fig. 15.

Fig. 15 is a diagram which exemplifies the metadata. Here, in Fig. 15, description is omitted of a portion of information of metadata (for example, information and the like which relates to an attribute value of the attribute src, layer 0, or layer 2) from the viewpoint of simplification of the drawings.

As understood viewing Fig. 15, the metadata in Fig. 15 includes the attribute d_r which indicates the overlap ratio in the same manner as the metadata in Fig. 11. Furthermore, the metadata in Fig. 15 is different from the MPD data in Fig. 11 and includes metadata which includes a Playlist tag. That is, the metadata in Fig. 15 is configured by MPD data and playlist data which references the AdaptationSet which is described in the MPD data and designates video which is reproduced at the specified time.

The Playlist tag is described below. Here, description of the tags and attributes which are described in Embodiment 1 or Embodiment 2 is omitted in the present embodiment.

As shown in Fig. 15, a plurality of Play tags are described between the Playlist start tag and the Playlist start tag. The attribute value of the attribute time of each Play tag indicates a time (specific time described above) at which the video of the AdaptationSet which indicates the attribute value of the attribute xlink: href of the Play tag is to be displayed.

Here, in Fig. 15, four Play tags are described between the Playlist start tag and Playlist start tag, but it is possible to describe an arbitrary number (for example, only one) of Play tags.

The MPD data is described above.

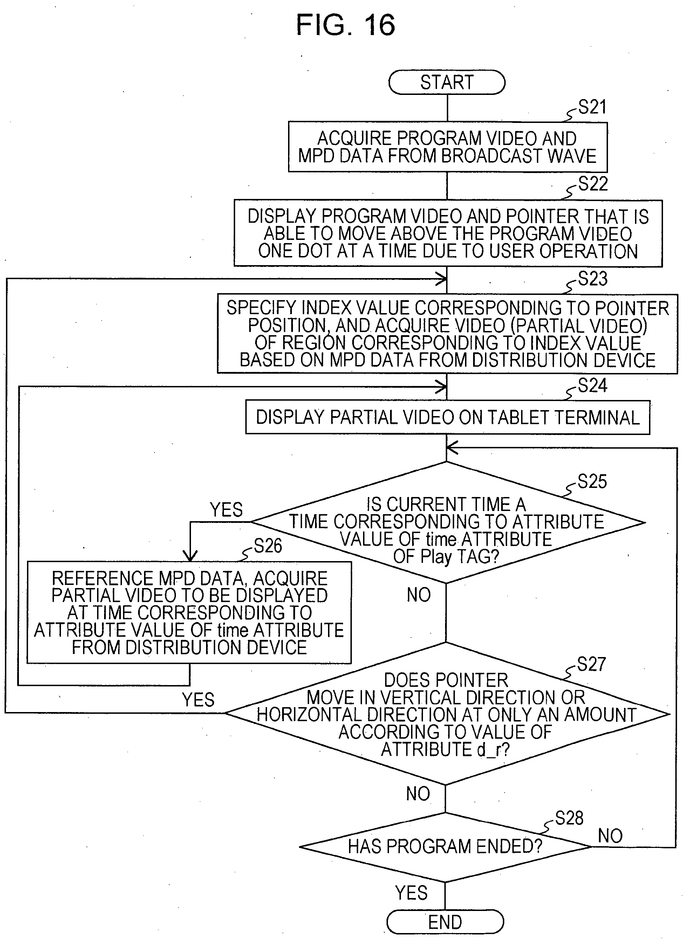

Next, an operation of the television 200B will be described with reference to Fig. 16. Here, as a premise, the television 200B is set so as to reference the AdaptationSet of layer 1 in order to display the 4K × 2K partial video.

### (Operation of Television 200B)

Fig. 16 is a flow chart illustrating an operation of the television 200B.

As shown in Fig. 16, the video acquisition processing section 220B of the television 200B initially acquires the MPD data and program video (full video) (step S21). Here, although not indicated in the flow chart in Fig. 16, in a case where the Play tag is included in the metadata such that the attribute value of the attribute time is "T00s", the video acquisition processing section 220B acquires the partial video which corresponds to the Play tag at the timing.

After step S21, the reproduction section 140 reproduces the full video acquired in step S21 and carries out full screen display on the display section 250, and the pointer described above is displayed at the coordinates (1920, 1080) in the coordinate system in which the upper left corner of the display section 250 is set as the origin point (step S22). Here, although not indicated in the flow chart in Fig. 16, in a case where the partial video which corresponds to the Play tag is acquired in step S21, the partial video is transmitted to the tablet terminal 300 at the timing in order to display the partial video on the tablet terminal 300.

After step S22, in step S23, the video acquisition processing section 220B specifies the index value which corresponds to the current pointer position.

In detail, in a case where a step immediately before step S23 is step S22, the index value (0, 0) is specified which corresponds to the position of the pointer (coordinates (1920, 1080)). In addition, in a case where a step immediately before step S23 is step S27, it is possible to specify the index value by adding (1, 0), (-1, 0), (0, 1) or (0, -1) with respect to the index value which is specified the previous time in step S27. For example, in step S27, in a case where it is determined that the pointer of only 1920 (= 3840 × (1-0.5)) dots with the amount of movement according to the attribute value "0.5" of attribute d_r moves in the right direction, it is possible to specify the index value by adding (1, 0) with respect to the previously specified index value.

After this, in step S23, the video acquisition processing section 220B references the MPD data, and specifies the acquisition destination of the partial video which corresponds to the specified index value. Furthermore, in step S23, the video acquisition processing section 220B acquires the partial video from the specified acquisition destination (distribution device 100).

After step S23, since the video acquisition processing section 220B displays the partial video which is acquired in step S23 or step S26 on the tablet terminal 300, the partial video is transmitted to the tablet terminal 300 (step S24).

After step S24, the video acquisition processing section 220B determines whether or not the current time is the time (for example, two seconds before the time which the attribute value indicates) which corresponds to the attribute value of the attribute time of any Play tag (step S25) .

In a case where the television 200B determines that the current time in step S25 is a time which corresponds to the attribute value of the attribute time of any Play tag, the process proceeds to step S26.

In step S26, the video acquisition processing section 220B references the metadata, and specifies the acquisition destination of the partial video which is to be displayed on the tablet terminal 300 at the time which corresponds to the attribute value of the attribute time. Then, in step S26, the video acquisition processing section 220B acquires the partial video from the specified acquisition destination (distribution device 100). After step S26, the television 200B returns to step S24.

On the other hand, in a case where the television 200B determines that the current time in step S25 is not a time which corresponds to the attribute value of the attribute time of any Play tag, the process proceeds to step S27.

Since step S27 and step S28 respectively have the same process of step S5 and step S6 in Fig. 4, description of step S27 and step S28 is omitted.

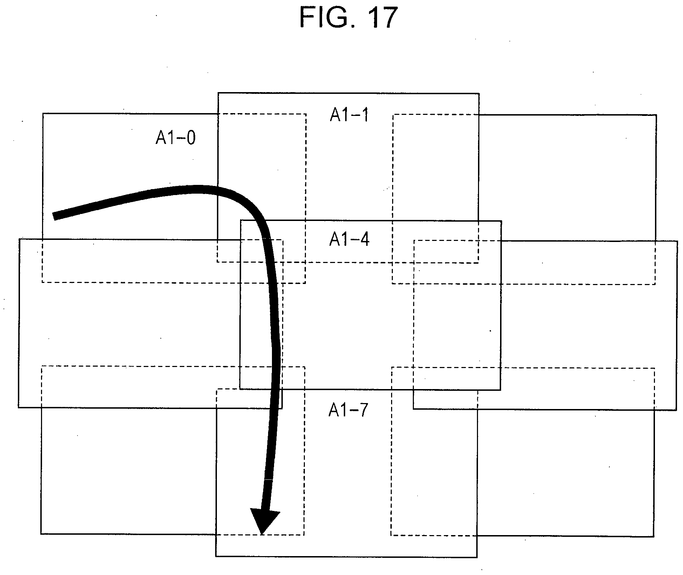

Due to the operation of the television 200B described above, the television 200B in which metadata in Fig. 15 is acquired in step S21 is not limited to receiving a movement operation of the pointer after the start of reproduction of full video, and the partial video is displayed on the tablet terminal in the order which is indicated in Fig. 17.

That is, the television 200B displays the partial video which corresponds to AdaptationSet A1-0 on the tablet terminal at the time point at which reproduction of full video starts, and displays the partial video which corresponds to AdaptationSet A1-1 on the tablet terminal five seconds after the start of reproduction of full video. Furthermore, the television 200B displays the partial video which corresponds to AdaptationSet Al-4 on the tablet terminal ten seconds after the start of reproduction of full video, and displays the partial video which corresponds to AdaptationSet A1-7 on the tablet terminal 15 seconds after the start of reproduction of full video.

### (Advantage of Television 200B)

The Play tag described above may be described by a controller or distributer of the program video. Thereby, on the television 200B, it is possible for a viewer to notice a portion which is thought to be desired to be noticed by the viewer at the specified time within the program video by the controller or the distributor.

### (Supplementary Information of Embodiment 3)

The television 200B may transmit the metadata which is acquired in step S21 to the tablet terminal 300. In this case, the tablet terminal 300 and not the television 200B may perform the processes of step S25 and step S26.

That is, the tablet terminal 300 may reference the metadata, and specify the acquisition destination of the partial video which is to be displayed at the time which corresponds to the attribute value from the distribution device 100 at a time at which the current time is a time that corresponds to the attribute value of the attribute time of at least one Play tag. Then, the tablet terminal 300 may acquire the partial video from the specified acquisition destination (distribution device 100), and display the acquired partial video on the display panel of the tablet terminal 300.

### (Other Supplementary Information 1)

The size of the full video and partial video is not particularly limited. In addition, the aspect ratio of the full video and partial video is not particularly limited.

Generally, simplicity and the like of control during reproduction is considered, and the partial video group of each layer which configured the full video is set to satisfy the following two conditions.
- The length of the vertical width of each partial video which is included in the partial video group is the same as the length of the vertical width of another partial video which is included in the partial video.
- The length of the horizontal width of each partial video which is included in the partial video group is the same as the length of the horizontal width of another partial video which is included in the partial video.

However, even in the partial video group in which the length of the vertical width and the length of the horizontal width are different at every position, it is theoretically possible to logically interpret and implement the adjacent partial videos by describing the vertical width and the horizontal width with respectively different Representations.

### (Other Supplementary Information 2)

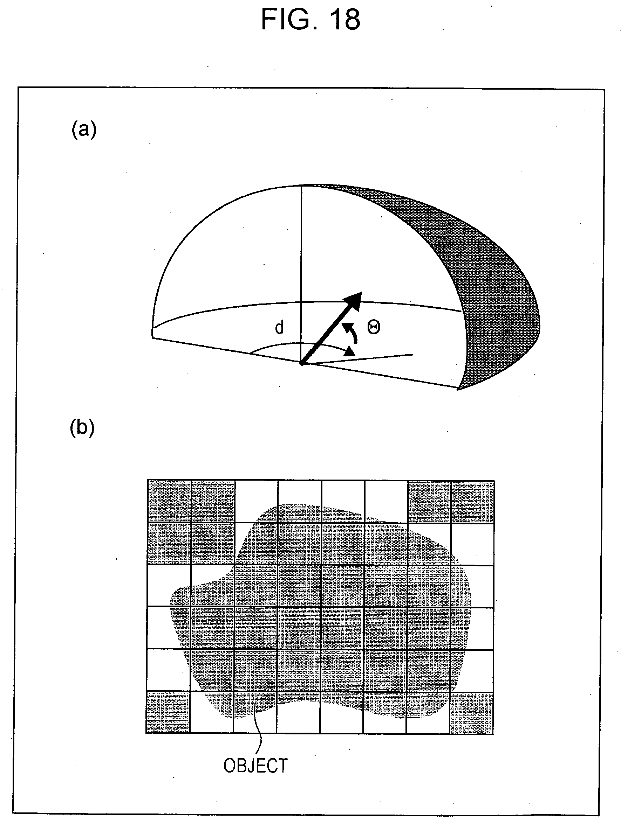

It is not necessary for the full video to be rectangular video on a horizontal plane. For example, the video may be omnidirectional video which is generated by an omnidirectional camera that is installed at a position of the start point of an arrow in Fig. 18(a). In this case, concerning each of various directions (direction which are determined by the combination of an azimuth angle and an elevation angle), the partial video which includes an object image which is positioned in the direction viewed from the omnidirectional camera may be extracted from the omnidirectional video.

In addition, the index value (a pair of an attribute value of the attribute i_x and an attribute value of the attribute i_y) which identifies the partial video in each partial video and information (attribute value of the attribute src) which indicates the acquisition destination of the partial video may be described in association in the MPD data, but the information below may be described in the MPD data.

That is, the pair of the azimuth angle d and the elevation angle θ which correspond to the partial video and information which indicates the acquisition destination of the partial video (attribute value of the attribute src) may be described in association in the MPD data in each partial video.

In this case, when the client terminal 200A receives the input of the azimuth angle d and the elevation angle θ, the MPD data may be referenced and the acquisition destination of the partial video which corresponds to the pair of the azimuth angle d and the elevation angle θ may be specified. Then, the client terminal 200A may acquire the partial video from the specified acquisition destination, and the acquired partial video may carry out full screen display on the display section 250.

### (Other Supplementary Information 3)

Outer periphery of the full video may exhibit an arbitrary shape other than a rectangle. In this case, a rectangular region may be specified which circumscribes the outer periphery of the full video, and the plurality of partial regions of A row and B column may be specified by dividing the rectangular region in a matrix form. Then, concerning each of the plurality of specified partial videos, in a case where a portion of the full video is included within the partial region, the video within the partial region may be set as partial video. In more detail, in a case where a portion of the full video is included within the partial region of the a^{th} row and b^{th} column, the video within the partial region may be set as the partial video, and the index value (a, b) and the information which indicates the acquisition destination of the partial video may be recorded in association within the MPD data.

For example, a case is considered where the outer periphery of the full video exhibits a dodecahedron as indicated in Fig. 18(b).

In this case, since a portion of the full video which is included within the partial region of the first row and the third column, the information which indicates the acquisition destination within the partial region and an index value (1, 3) are described in association within the MPD data. Meanwhile, since some portion of the full video is also included within the partial region of the first row and the sixth column, an index value (1, 6) is not recorded within the MPD data. Alternatively, the index value (a, b) which corresponds to the partial region in which no portion of the full video is included and the flag (for example, missing tag) which indicates that there is no partial video in the partial region may be recorded in association within the MPD data.

### (Other Supplementary Information 4)

In each embodiment of the present invention, among the MPD data, the Role tag or the Tile tag is described as an element tag which describes the attribute value according to the position of the partial video, but is a description example merely for description. Even if an element tag other than the Role tag and the Tile tag are defined separately as the element tag, and the MPD data is generated which includes the element tag, it is possible to realize the advantage of the present invention. In addition, even in the metadata other than MPD data, needless to say, it is possible to realize the advantage of the present invention if the metadata holds the configuration in the similar manner.

### [Program and the like]

A control block of the distribution device, the television, and the client terminal (in particular, the video distribution processing section, video acquisition processing section, and reproduction section) may be realized by a logic circuit (hardware) which is formed in an integrated circuit (IC chip) and the like, and may be realized by software using a central processing unit (CPU).

In the case of the latter, each device of the distribution device, the television, and the client terminal is provided with the CPU which executes a command of a program which is software that realizes each function, a read only memory (ROM) in which the program and various data is readably recorded by the computer (or CPU), a random access memory (RAM) which develops the storage device (referred to as "recording medium") and the program, or the like. Then, the object of the present invention is realized by the computer (or CPU) executing the program by reading from the recording medium. As the recording medium, it is possible to use a "non-temporary tangible medium", for example, a tape, a disc, a card, a semiconductor memory, a programmable logic circuit, and the like. In addition, the program may supply the program to the computer via an arbitrary transmission medium which is possible to transmit (communication network, broadcast wave, and the like). Here, in the present invention, the program is embodied by electronic transmission, and is able to be realized even in a form of a data signal which is embedded in a carrier wave.

### [Outline]

The display processing device according to Aspect 1 of the present invention is provided with reception means (operation reception section) which receives a selection of the partial video adjacent to the partial video (adjacently above, adjacently below, adjacently left, or adjacently right) which is a display target from within the plurality of partial videos which configures the full video to the specified display region (a small screen which occupies a portion of the display screen of the tablet terminal 300 and the display screen of the display section 250), metadata acquisition means (video acquisition processing section 220) which acquires metadata (MPD data) in which the identifier (index value) and acquisition destination (URL) of the partial video of each of the plurality of partial videos are indicated in association, video acquisition means (video acquisition processing section 220) which specifies by referencing the identifier of the partial video which indicates the acquisition destination of the selected adjacent partial video in the metadata and acquires the partial video from the acquisition destination, and display update means (video acquisition processing section 220) which updates the partial video of the display region to the partial video which is acquired by the video acquisition means, in which the respective identifiers (pair of the attribute value of the attribute i_x and the attribute value of the attribute i_y) of the plurality of partial videos are identifiers which are able to specify the identifier of the partial video adjacent to the partial video without referencing other information.

According to the configuration above, the display processing device is able to specify the identifier of the partial video which is desired by the viewer to display in the specified display region without referencing other information.

Consequently, the display processing device exhibits an effect of being able to also easily specify the acquisition destination of the partial video which is recorded in association with the identifier in the metadata.

In Aspect 1, the display processing device (client terminal 200A) according to Aspect 2 of the present invention may include common images to the partial video and the partial video adjacent to a direction which is viewed from the partial video out of the plurality of partial videos, the identifier and acquisition destination of the partial video may be added to the metadata and a value is indicated which indicates a proportion that occupy each partial video of the common images, and the reception means may recognize that the adjacent partial video is selected by detecting the movement operation of an amount according to the value in the direction in a state in which the partial video is the display target in the display region.

According to the configuration above, with respect to a person who observes the partial video which is displayed in the display region, the display processing device further exhibits an effect of being able to easily ascertain switching of the partial video which is displayed in the display region due to the movement operation of the person who observes and another person to the partial video in the direction above.

Information which specifies the partial video to be displayed in the display region at the specified time out of the plurality of partial videos may be included in the metadata, and in the display processing device (television 200B) according to the Aspect 3 of the present invention, when the display update means (video acquisition processing section 220B) becomes the specified time in Aspect 1 or Aspect 2, the partial video of the display region may be the partial video which is acquired by the video acquisition processing means and update to the partial video which is specified by the information that is included in the metadata.

According to the configuration above, the display processing device further exhibits an effect of being able to display the partial video which is considered by the distributor of the full video to be displayed in the display region at the specified time in the display region in which the operation by the viewer is not necessary.

The distribution device (distribution device 100) which is the acquisition destination of the partial video by the video acquisition means may be configured so as to be able to distribute a first video group made from N partial videos (four layer 1 partial videos) which hold the resolution (4K × 2K resolution) and a second video group made from N partial videos (four layer 1 partial videos) which hold the resolution (full HD resolution) which is different from the resolution as the plurality of partial videos, the partial video (partial video of AdaptationSet A1-0) which is included in the first video group in the metadata and the partial video (partial video of AdaptationSet A1-0) which are included in the second video group which is partial video with the same content as the partial video may include the common identifier (index value (0, 0)), and in the display processing device according to Aspect 4 of the present invention, the reception means may receive the selection of the adjacent partial videos from within any video group out of the first video group and the second video group in any aspect of Aspect 1 to Aspect 3.

According to the configuration above, the display processing device further exhibits an effect of being able to display the partial video which is selected from within the appropriate video group out of the first video group and the second video group in the display region.

The distribution device which is the acquisition destination of the partial video by the video acquisition means may be configured so as to be able to distribute N (N ≥ 2) partial videos (four layer 1 partial videos) which configure the full video and M (M > N) partial videos (16 layer 2 partial videos) which configure the full video as the plurality of partial videos, and in the display processing device according to Aspect 5 of the present invention, the reception means may receive the selection of the adjacent partial video from the plurality of partial videos according to setting of the display processing device out of M partial videos and N partial videos in any aspect of Aspect 1 to Aspect 3.

According to the configuration above, the display processing device further exhibits an effect of being able to display the appropriate partial video according to the setting of the display processing device in the display region.

In the display processing device according to Aspect 6 of the present invention, the display region may be a display region (display surface) of a mobile terminal (tablet terminal 300) which is connected so as to able to communicate with the display processing device in any aspect of Aspect 1 to Aspect 5.

According to the configuration above, the display processing device further exhibits an effect of being able to display the partial video on the mobile terminal.

In the display processing device according to Aspect 7 of the present invention, the display region may be an entire region or a partial region (a region which a small screen occupies on a display surface of the display section 250) of a display surface (display surface of the display section 250) of the display processing device in any aspect of Aspect 1 to Aspect 5.

According to the configuration above, the display processing device further exhibits an effect of being able to display the partial video by the display processing device.

The distribution device (distribution device 100) according to Aspect 8 of the present invention includes reading means (video distribution processing section 120) which reads metadata (MPD data) in which the identifier (index value) and acquisition destination (URL) of the partial video are indicated concerning each of a plurality of partial videos which configure the full video from a storage section, and distribution means (video distribution processing section 120) which distributes the metadata which is read by the reading means, in which the respective identifiers of the plurality of partial videos are identifiers which are able to specify the identifier of the partial video adjacent to the partial video without referencing other information.

According to the configuration above, the distribution device exhibits an effect of being able to distribute metadata in which the display processing device is able to easily specify the acquisition destination of the partial video.

A display processing method according to Aspect 9 of the present invention includes receiving a selection of the partial video adjacent to the partial video which is a display target of a specified display region from within a plurality of partial videos which configure the full video (step S5), acquiring metadata in which an identifier and an acquisition destination of the partial video are indicated in association in each of the plurality of partial videos (step S1), specifying by referencing the identifier of the partial video in which the acquisition destination of the selected adjacent partial video is indicated in the metadata and acquiring the partial video from the specified acquisition destination (step S3), and updating the partial video which acquires the partial video of the display region (step S4), in which the respective identifiers of the plurality of partial videos are identifiers which are able to specify the identifier of the partial video adjacent to the partial video without referencing other information.

According to the configuration above, the display processing method exhibits actions and effects in the same manner as the display processing device according to Aspect 1 of the present invention.

The metadata (MPD data) according to Aspect 10 of the present invention is metadata which the identifier (index value) and acquisition destination (URL) of the partial video concerning each of a plurality of partial videos which configure the full video indicate, and the respective identifiers of the plurality of partial videos are identifiers which are able to specify the identifier of the partial video adjacent to the partial video without referencing other information.

According to the configuration above, in the metadata, the display processing device exhibits an effect of being able to easily specify the acquisition destination of the partial video.

The display processing device according to each aspect of the present invention may be realized by the computer, and in this case, a program for realizing the display processing device on a computer by operating the computer as each means that the display processing device is provided with, and a computer-readable recording medium on which the program is recorded are included in the scope of the present invention.

The present invention is not limited to each embodiment described above, various modifications are possible in a range indicated in the claims, and embodiments obtained by appropriately combining the technical means respectively disclosed in different embodiments are included in the technical scope of the present invention. Furthermore, it is possible to form a new technical characteristic by combining technical means which are respectively disclosed in each embodiment.

### Industrial Applicability

For example, it is possible to appropriately utilize the present invention in a television of high resolution 4K2K television, 8K4K television, and the like.

### Reference Signs List

100 DISTRIBUTION DEVICE
120 VIDEO DISTRIBUTION PROCESSING SECTION (READING MEANS, DISTRIBUTION MEANS)
200 TELEVISION (DISPLAY PROCESSING DEVICE)
220 VIDEO ACQUISITION PROCESSING SECTION (METADATA ACQUISITION MEANS, VIDEO ACQUISITION MEANS, DISPLAY UPDATE MEANS)
240 REPRODUCTION SECTION
300 TABLET TERMINAL
200A CLIENT TERMINAL (DISPLAY PROCESSING DEVICE)

## Claims

1. A distribution device for distributing information relating to a content, the devise comprising:
an acquire unit configured to acquire media presentation description (MPD) data including information relating to a partial video that is at least a part of a full video; and
a distribution unit configured to distribute the MPD data, wherein
the information is described by at least one of a Sub-Presentation of MPEG-DASH and an Adaptation Set of MPEG-DASH,
the partial video spatially occupies at least a part of a video region of the full video; and
the information includes (i) a parameter which indicates, based on a left upper coordinate of the full video, a left upper coordinate of the partial video and (ii) a parameter which indicates a width and a height of the full video.

2. A method of a distribution device for distributing information relating to a content, the devise comprising:
acquiring media presentation description (MPD) data including information relating to a partial video that is at least a part of a full video; and
distributing the MPD data, wherein
the information is described by at least one of a Sub-Presentation of MPEG-DASH and an Adaptation Set of MPEG-DASH,
the partial video spatially occupies at least a part of a video region of the full video; and
the information includes (i) a parameter which indicates, based on a left upper coordinate of the full video, a left upper coordinate of the partial video and (ii) a parameter which indicates a width and a height of the full video.

3. A display processing device for receiving information relating to a content, the devise comprising:
an acquire unit configured to acquire media presentation description (MPD) data including information relating to a partial video that is at least a part of a full video; and
a receive unit configured to receive the MPD data, wherein
the information is described by at least one of a Sub-Presentation of MPEG-DASH and an Adaptation Set of MPEG-DASH,
the partial video spatially occupies at least a part of a video region of the full video; and
the information includes (i) a parameter which indicates, based on a left upper coordinate of the full video, a left upper coordinate of the partial video and (ii) a parameter which indicates a width and a height of the full video.

4. The distribution device as set forth in claim 1, wherein:
the information further includes a parameter for identifying a group to which the partial video belongs.

5. The distribution device as set forth in claim 4, wherein:
the partial video includes a plurality of partial videos; and
the group is a set of the plurality of partial videos which are identical in at least one of (i) resolution of a corresponding full video, (ii) the number of division, and (iii) content.

## Patentansprüche

1. Verteilervorrichtung zum Verteilen von Informationen, die sich auf einen Inhalt beziehen, wobei die Vorrichtung umfasst:
eine Erfassungseinheit, die konfiguriert ist, Medienpräsentationsbeschreibungs- (MPD)-Daten zu erfassen, einschließlich Informationen, die sich auf ein Teilvideo beziehen, das zumindest ein Teil eines Vollvideos ist; und
eine Verteilereinheit, die konfiguriert ist, die MPD-Daten zu verteilen, wobei die Informationen durch zumindest eines von einer Subpräsentation von MPEG-DASH und eines Anpassungssatzes von MPEG-DASH beschrieben werden,
das Teilvideo räumlich zumindest einen Teil eines Videobereichs des Vollvideos einnimmt; und
die Informationen (i) einen Parameter, der basierend auf einer linken oberen Koordinate des Vollvideos eine linke obere Koordinate des Teilvideos angibt,
und (ii) einen Parameter enthalten, der eine Breite und eine Höhe des Vollvideos angibt.

2. Verfahren einer Verteilervorrichtung zum Verteilen von Informationen, die sich auf einen Inhalt beziehen, wobei die Vorrichtung umfasst:
Erfassen von Medienpräsentationsbeschreibungs- (MPD)-Daten, einschließlich Informationen, die sich auf ein Teilvideo beziehen, das zumindest ein Teil eines Vollvideos ist; und
Verteilen der MPD-Daten, wobei
die Informationen durch zumindest eines von einer Subpräsentation von MPEG-DASH und eines Anpassungssatzes von MPEG-DASH beschrieben werden,
das Teilvideo räumlich zumindest einen Teil eines Videobereichs des Vollvideos einnimmt; und
die Informationen (i) einen Parameter, der basierend auf einer linken oberen
Koordinate des Vollvideos eine linke obere Koordinate des Teilvideos angibt,
und (ii) einen Parameter enthalten, der eine Breite und eine Höhe des Vollvideos angibt.

3. Anzeigeverarbeitungsvorrichtung zum Empfangen von Informationen, die sich auf einen Inhalt beziehen, wobei die Vorrichtung umfasst:
eine Erfassungseinheit, die konfiguriert ist, Medienpräsentationsbeschreibungs- (MPD)-Daten zu erfassen, einschließlich Informationen, die sich auf ein Teilvideo beziehen, das zumindest ein Teil eines Vollvideos ist; und
eine Empfangseinheit, die konfiguriert ist, die MPD-Daten zu empfangen, wobei
die Informationen durch zumindest eines von einer Subpräsentation von MPEG-DASH und eines Anpassungssatzes von MPEG-DASH beschrieben werden,
das Teilvideo räumlich zumindest einen Teil eines Videobereichs des Vollvideos einnimmt; und
die Informationen (i) einen Parameter, der basierend auf einer linken oberen Koordinate des Vollvideos eine linke obere Koordinate des Teilvideos angibt,
und (ii) einen Parameter enthalten, der eine Breite und eine Höhe des Vollvideos angibt.

4. Verteilervorrichtung nach Anspruch 1, wobei:
die Informationen ferner einen Parameter zum Identifizieren einer Gruppe enthalten, zu der das Teilvideo gehört.

5. Verteilervorrichtung nach Anspruch 4, wobei:
das Teilvideo eine Mehrzahl von Teilvideos enthält; und
die Gruppe ein Satz der Mehrzahl von Teilvideos ist, die in zumindest einem von (i) einer Auflösung eines entsprechenden Vollvideos, (ii) der Anzahl der Aufteilungen und (iii) des Inhalts identisch sind.

## Revendications

1. Dispositif de distribution pour distribuer des informations concernant un contenu, le dispositif comprenant :
un module d'acquisition configuré pour acquérir des données de description de présentation de média (MPD) incluant des informations concernant une vidéo partielle qui est au moins une partie d'une vidéo entière ; et
un module de distribution configuré pour distribuer les données MPD, dans lequel
les informations sont décrites par au moins un d'une sous-présentation de MPEG-DASH et d'un ensemble d'adaptation de MPEG-DASH,
la vidéo partielle occupe spatialement au moins une partie d'une région vidéo de la vidéo entière ; et
les informations incluent (i) un paramètre qui indique, en fonction d'une coordonnée supérieure gauche de la vidéo entière, une coordonnée supérieure gauche de la vidéo partielle et (ii) un paramètre qui indique une largeur et une hauteur de la vidéo entière.

2. Procédé d'un dispositif de distribution pour distribuer des informations concernant un contenu, le dispositif comprenant :
acquérir des données de description de présentation de média (MPD) incluant des informations concernant une vidéo partielle qui est au moins une partie d'une vidéo entière ; et
distribuer les données MPD, dans lequel
les informations sont décrites par au moins un d'une sous-présentation de MPEG-DASH et d'un ensemble d'adaptation de MPEG-DASH,
la vidéo partielle occupe spatialement au moins une partie d'une région vidéo de la vidéo entière ; et
les informations incluent (i) un paramètre qui indique, en fonction d'une coordonnée supérieure gauche de la vidéo entière, une coordonnée supérieure gauche de la vidéo partielle et (ii) un paramètre qui indique une largeur et une hauteur de la vidéo entière.

3. Dispositif de traitement d'affichage pour recevoir des informations concernant un contenu, le dispositif comprenant :
un module d'acquisition configuré pour acquérir des données de description de présentation de média (MPD) incluant des informations concernant une vidéo partielle qui est au moins une partie d'une vidéo entière ; et
un module de réception configuré pour recevoir les données MPD, dans lequel les informations sont décrites par au moins un d'une sous-présentation de MPEG-DASH et d'un ensemble d'adaptation de MPEG-DASH,
la vidéo partielle occupe spatialement au moins une partie d'une région vidéo de la vidéo entière ; et
les informations incluent (i) un paramètre qui indique, en fonction d'une coordonnée supérieure gauche de la vidéo entière, une coordonnée supérieure gauche de la vidéo partielle et (ii) un paramètre qui indique une largeur et une hauteur de la vidéo entière.

4. Dispositif de distribution selon la revendication 1, dans lequel :
les informations incluent en outre un paramètre pour identifier un groupe auquel la vidéo partielle appartient.

5. Dispositif de distribution selon la revendication 4, dans lequel :
la vidéo partielle inclut une pluralité de vidéos partielles ; et
le groupe est un ensemble de la pluralité de vidéos partielles qui sont identiques dans au moins un élément parmi (i) la résolution d'une vidéo entière correspondante, (ii) le nombre de division et (iii) le contenu.
